# EUROPÄISCHE PATENTSCHRIFT

(11) **EP 3 988 272 B1**
(45) Veröffentlichungstag und Bekanntmachung des Hinweises auf die Patenterteilung: **25.01.2023**
(21) Anmeldenummer: 21192700.9
(22) Anmeldetag: 24.08.2021
(51) Int. Cl.: B29C 45/14

(54) **VERFAHREN ZUR HERSTELLUNG EINES VERBUNDKÖRPERS DURCH SPRITZGIESSEN**
METHOD OF PRODUCING A COMPOSITE BODY BY MEANS OF INJECTION MOULDING
PROCÉDÉ DE FABRICATION D'UN CORPS COMPOSITE PAR MOULAGE PAR INJECTION

(30) Priorität: 26.10.2020 DE 102020128074
(43) Veröffentlichungstag der Anmeldung: 27.04.2022
(73) Patentinhaber: Spies Kunststoffe GmbH, 49326 Melle (DE)
(72) Erfinder: PÖHLS, Guido, 72555 Metzingen (DE)
(74) Vertreter: Truckenmüller, Frank

(56) Entgegenhaltungen:
- EP-A1- 1 504 872
- JP-A- H0 691 691
- JP-A- H05 278 066
- JP-A- 2007 307 769
- JP-A- 2010 162 763

## Beschreibung

Die Erfindung betrifft ein Verfahren zur Herstellung eines Verbundkörpers durch Spritzgießen. Insbesondere betrifft die Erfindung ein Verfahren zu Herstellung eines zwischen einem einteiligen Einleger beidseitig eingeschlossenen Kunststoffkörpers. Bei den Einlegern kann es sich um Folien oder um starre Körper handeln.

Aus der Praxis sind Produkte, beispielsweise Behälter und Deckel, bekannt geworden, die sowohl auf ihrer Innenseite als auch auf ihrer Außenseite mit einer Dekoration versehen sind. Diese Produkte wurden bislang derart hergestellt, dass in eine erste Werkzeughälfte (Matrize) eines Spritzgießwerkzeugs ein separater erster Einleger eingelegt wurde und in eine zweite Werkzeughälfte (Patrize) des Spritzgießwerkzeugs ein separater zweiter Einleger eingelegt wurde. Bei den Einlegern kann es sich beispielsweise um sogenannte IML-Folien handeln, also um mit einer oder mehreren Dekorationen versehene, beispielsweise beschriftete oder bedruckte Folien-Etiketten, die im Spritzgießverfahren in einem Spritzgießwerkzeug in einem einstufigen Arbeitsprozess unter Ausbildung eines Folienträgers zu einem Verbundkörper geformt werden. Bei diesem Verfahren muss bislang vor dem Einlegen des separaten zweiten Einlegers in die Patrize des Spritzgießwerkzeugs, also auf der Entformungsseite des Spritzgießwerkzeugs, zunächst der fertige Verbundkörper aus dem Spritzgießwerkzeug entnommen worden sein, bevor ein weiterer zweiter Einleger zur Herstellung eines weiteren Verbundkörpers eingelegt wird. Mit anderen Worten gesagt, muss vor dem Einlegen eines weiteren separaten Einlegers in die Patrize bzw. auf der Entnahmeseite der fertige Verbundkörper des vorangegangenen Zyklus entnommen worden sein. Dadurch kommt es bei diesem Verfahren zu entsprechend langen Zykluszeiten. Außerdem können bei diesem Verfahren nur mehrteilige Einleger verwendet werden, also mehrere separate Einleger.

Die Nachteile der bekannten Lösungen sind zusammengefasst:
- Zykluszeitverlust
- Nur mehrteilige Einleger möglich

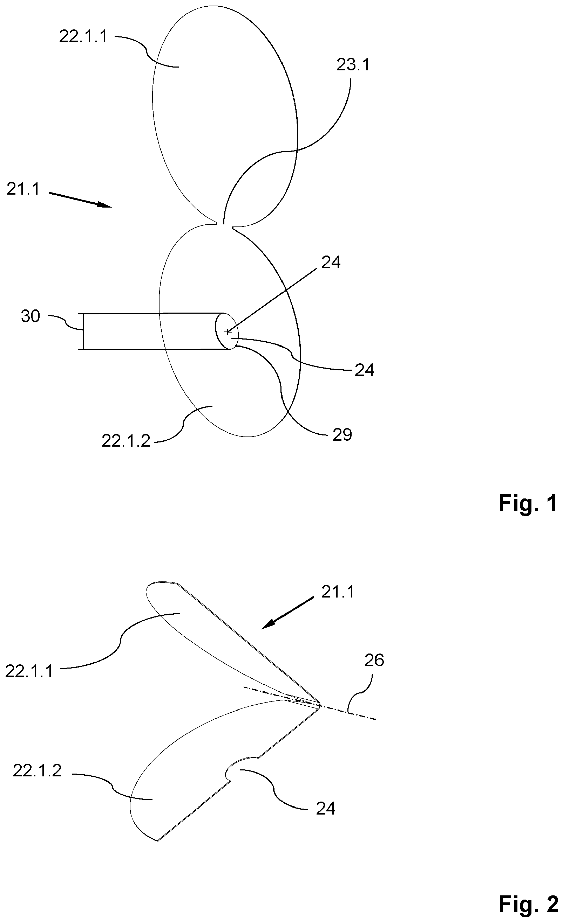

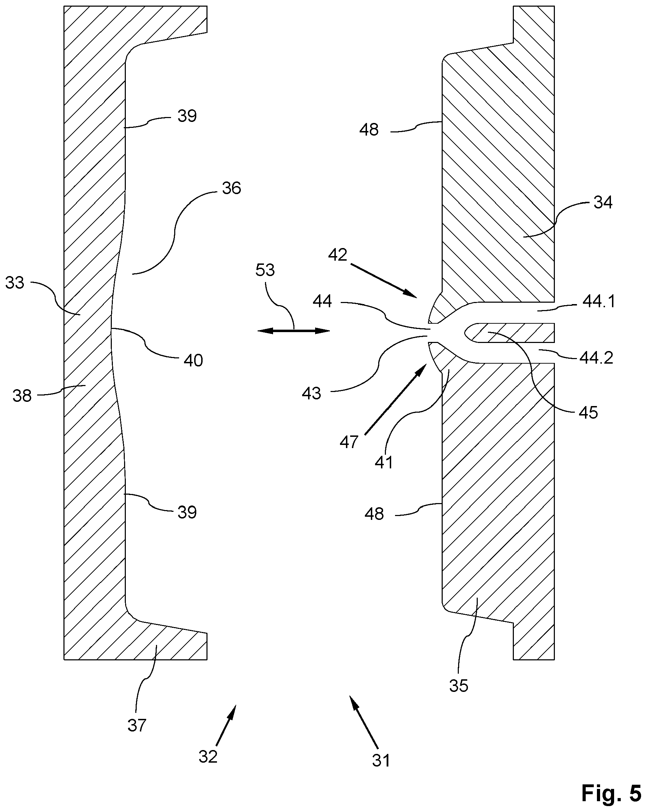

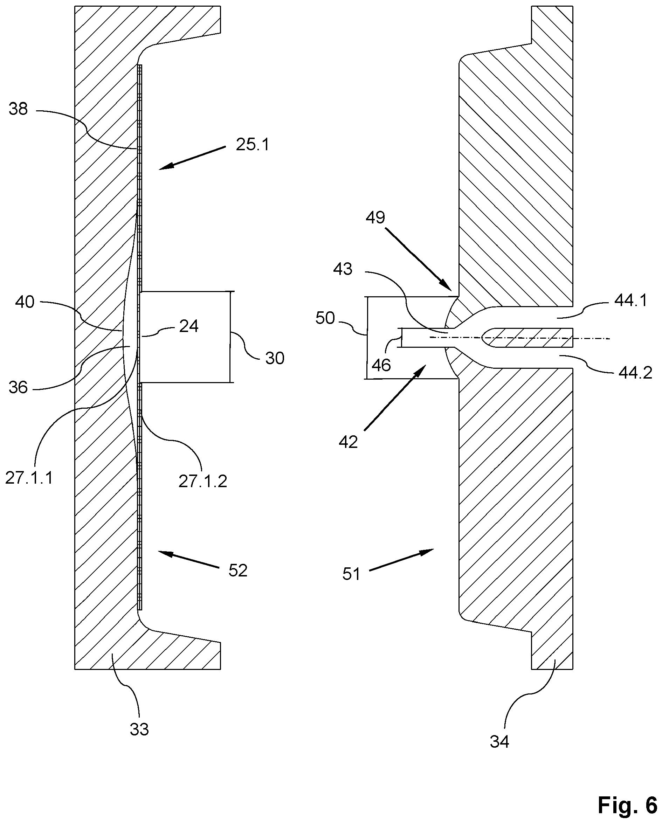

Aus der JP H06 91691 A sind mehrere Verfahren zur Herstellung eines Verbundkörpers offenbart. In dieser Druckschrift ist in den Figur 6a bis 6c in Verbindung mit der zugehörigen Beschreibung ein Verfahren nach dem Stand der Technik offenbart, mit dem ein Verbundkörper in Form eines Behälters zur Aufnahme von Nahrungsmitteln und dergleichen herstellbar ist. Dabei wird ein einziges Schrumpffolien-Etikett in eine zylindrische Form gebracht und mittels eines Vorformwerkzeugs unter Einwirkung von Hitze durch Aufschrumpfen auf einen Kern des Vorformwerkzeugs in ein vorgeformtes Einleger-Etikett geformt. Anschließend wird das vorgeformte Einleger-Etikett auf die Innenkontur einer mit einer Einspritzdüse versehenen weiblichen Werkzeughälfte (konkave Matrize) eines Spritzgießwerkzeugs gelegt, worauf das Spritzgießwerkzeug geschlossen und dann geschmolzenes Kunststoffmaterial durch die Einspritzdüse in den Werkzeughohlraum eingespritzt wird, so dass der resultierende Kunststoff-Behälter an seiner umlaufenden Außenseite mit dem Einleger-Etikett versehen ist. Zur Vermeidung der bei diesem Stand der Technik vorhandenen Nachteile sind gemäß der vorgenannten Druckschrift mehrere Verfahren zur Herstellung eines Verbundkörpers in Form eines Behälters zur Aufnahme von Nahrungsmitteln und dergleichen offenbart. Gemäß einer ersten Verfahrensalternative wird in gleicher Weise zunächst ein vorgeformtes zylindrisches Schrumpffolien-Etikett durch Hitze unter Aufschrumpfen auf einen Kern eines Vorformwerkzeugs in eine rohrförmige Form gebracht. An diesem vorgeformten zylindrischen Etikett wird an einem offenen Ende seiner auf beiden offenen Enden ein Hilfsetikett integral befestigt, und zwar entweder durch Verkleben mittels eines schmelzbaren Klebers oder durch Verschweißen der beiden Etiketten untereinander. Das kreisscheibenförmige Hilfsetikett weist ein Kunststoff-Durchström-Loch auf und wird derart mit dem vorgeformten zylindrischen Etikett verklebt, dass ein umgebogener, umlaufender Innenrand des vorgeformten Etiketts den umlaufenden Außenrand des Hilfsetiketts außenseitig überlappt und dass das zentrale Kunststoff-Durchströmloch des kreisscheibenförmigen Hilfsetiketts frei bleibt, also nicht von dem umlaufenden Innenrand des vorgeformten Etiketts überdeckt wird. Dadurch gelangt man zu einem vorgeformten, schalenförmigen Produkt, das integral aus dem Etikett und dem Hilfsetikett gebildet ist. Dieses vorgeformte, schalenförmige Produkt wird gemäß der ersten Verfahrensalternative in einen passend gestalteten Hohlraum einer weiblichen Werkzeughälfte (konkave Matrize) eingelegt, die mit einer Spritzgießdüse zum Einspritzen von schmelzeflüssigem Kunststoff versehen ist. Nach dem Schließen des Spritzgießwerkzeugs wird geschmolzenes Kunststoffmaterial durch die Spritzgießdüse und in und durch das ihrer Austrittsöffnung unmittelbar gegenüberliegende, zentrale Kunststoff-Durchström-Loch des Hilfsetiketts hindurch in einen Werkzeughohlraum des Spritzgießwerkzeugs eingespritzt, um den fertigen Behälter auszubilden. In der männlichen Werkzeughälfte (konvexe Patrize) ist eine zentrale, linsenförmige, konkave Führungsausnehmung ausgebildet, welche in dem geschlossenen Spritzgießwerkzeug dem Kunststoff-Durchströmloch des kreisscheibenförmigen Hilfsetiketts und folglich auch der Austrittsöffnung der Spritzgießdüse gegenüberliegt. Die konkave Führungsausnehmung der männlichen Werkzeughälfte dient beim Einspritzen des geschmolzenen Kunststoffs durch das zentrale Kunststoff-Durchströmloch des Hilfsetiketts hindurch in den Werkzeughohlraum des Spritzgießwerkzeugs zur gleichmäßigen Verteilung des geschmolzenen Kunststoffes hinter dem vorgeformten, integral aus dem Etikett und dem Hilfsetikett gebildeten Produkt. Das Hilfsetikett kann auch mit mehreren Fuß-Durchströmlöchern zur Herstellung von aus Kunststoff bestehenden Behälter-Füssen des Behälters versehen sein. Hierzu kann die weibliche Werkzeughälfte Fuß-Nuten aufweisen, wobei zur Herstellung der Behälter-Füße der mittels der Einspritzdüse durch das zentrale Kunststoff-Einströmloch des Hilfsetiketts in den Werkzeughohlraum hinter das Hilfsetikett gespritzte schmelzeflüssige Kunststoff durch die weiteren Kunststoff-Durchströmlöcher des Hilfsetiketts in einer Richtung entgegengesetzt zu der durch die Einspritzdüse vorgegebenen Einspritzrichtung hindurch bis in die Fuß-Nuten der weiblichen Werkzeughälfte strömen kann, so dass sich dort die Kunststoff-Füße des Behälters ausbilden können (siehe Figuren 1 bis 4 mit zugehörigen Beschreibungsteilen). Gemäß einer weiteren erfindungsgemäßen Verfahrensalternative zur Herstellung eines entsprechenden Verbundkörpers (siehe Figuren 5a und 5b mit zugehörigen Beschreibungsteilen der vorgenannten Druckschrift) wird zunächst ebenfalls, wie vorstehend, ein vorgeformtes Produkt hergestellt, wobei das kreisscheibenförmige Hilfsetikett nun mit keinem zentralen Kunststoff-Durchströmloch mehr versehen ist. Bei dieser Verfahrensalternative wird das vorgeformte Produkt wieder entsprechend in eine weibliche Werkzeughälfte (konkave Matrize) eingelegt, die nun keine Einspritzdüse mehr aufweist. Hingegen weist nun die männliche Werkzeughälfte (konvexe Patrize) eine Spritzgießdüse zum Einspritzen des schmelzeflüssigen Kunststoffs auf. Bei diesem alternativen Verfahren wird also das in die weibliche Werkzeughälfte des geöffneten Spritzgießwerkzeugs eingelegte, vorgeformte, aus dem Etikett und dem Hilfsetikett integral gebildete Produkt nach dem Schließen des Spritzgießwerkzeugs durch Einspritzen des schmelzeflüssigen Kunststoffs durch die Einspritzdüse der männlichen Werkzeughälfte mit dem schmelzeflüssigem Kunststoff hinterspritzt. In einer Ausgestaltung dieser Variante kann das mit keinem zentralen Kunststoff-Durchström-Loch versehene Hilfsetikett gegenüber dem Zentrum radial nach außen versetzt mit mehreren Fuß-Kunststoff-Durchström-Löchern versehen sein. Diese sind derart angeordnet, dass sie im geschlossenen Spritzgießwerkzeug nicht der Einspritzdüse gegenüber liegen, sondern jeweils radial nach außen versetzt Fuß-Nuten in der weiblichen Werkzeughälfte gegenüber liegen, so dass beim Hinterspritzen des Hilfsetiketts mit schmelzeflüssigem Kunststoff, dieser durch die Fuß-Durchström-Löcher des Hilfsetiketts hindurch in die zugehörigen Fuß-Nuten der weiblichen Werkzeughälfte gelangen kann, um dort Kunststoff-Füße des Behälters auszubilden. Durch alle in der vorstehenden Druckschrift offenbarten Verfahren ist jeweils nur ein Kunststoff-Behälter herstellbar, der ausschließlich an seiner umlaufenden Außenseite mit einem Etikett versehen ist. Folglich ist damit kein Verbundkörper herstellbar, der einen beidseitig mit Einlegerteilen eingeschlossenen Körper bzw. Kern, insbesondere einen Kunststoffkörper bzw. Kunststoffkern aufweist. Außerdem sind alle diese Verfahren vergleichsweise aufwändig.

In der JP 2010 162763 A ist ein Verfahren zur Herstellung eines mit einem einzigen IML-Etikett versehen Behälters offenbart. Das Etikett wird in das geöffnete Spritzgießwerkzeug in die weibliche Werkzeughälfte (konkave Matrize) eingelegt. Nach dem Schließen des Spritzgießwerkzeugs, so dass die mit einem Werkzeugkern versehene männliche Werkzeughälfte (konvexe Patrize) in die konkave Öffnung der weiblichen Werkzeughälfte unter Ausbildung eines Werkzeughohlraums eintaucht, wird durch eine in der männlichen Werkzeughälfte vorgesehene Einspritzdüse schmelzeflüssiger Kunststoff in den Werkezughohlraum eingespritzt, so dass das Etikett mit dem schmelzeflüssigen Kunststoff hinterspritzt wird. Mit diesem Verfahren ist kein Verbundkörper mit einem beidseitig mit Einlegerteilen eingeschlossenen Körper bzw. Kern, insbesondere einem Kunststoffkörper bzw. Kunststoffkern, herstellbar.

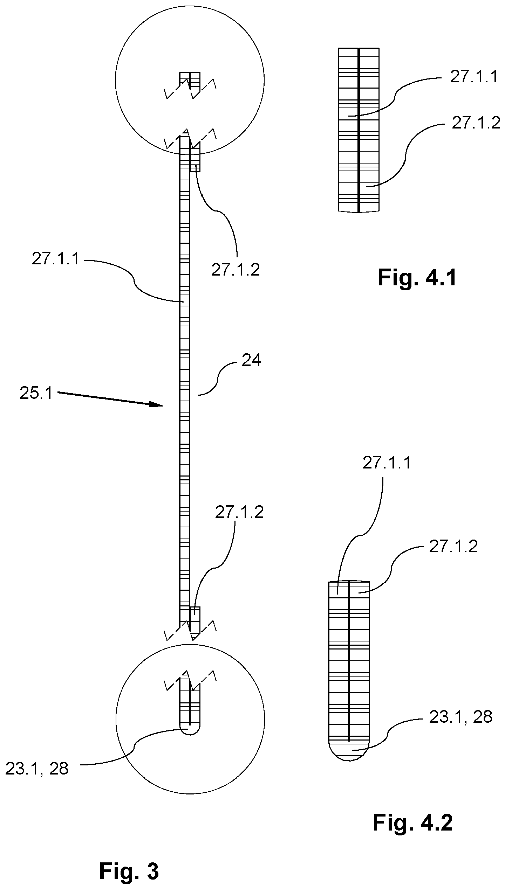

In der JP H05 278066 A sind mehrere Verfahren zur Herstellung eines mit einem oder mehreren separaten Einlegern versehenen Behälters offenbart. Gemäß dem dort beschriebenen und in Figur 4 veranschaulichten Stand der Technik wird ein einziges, mit einem zentralen Durchgangsloch versehenes Etikett in ein geöffnetes Spritzgießwerkzeug eingelegt, das einen ersten Werkzeugteil mit einer Spritzgießdüse und einen zweiten Werkzeugteil in Form eines Stössels umfasst. Der erste Werkzeugteil ist im Bereich der Austrittsöffnung der Spritzgießdüse konvex nach außen gewölbt gestaltet. Der gegenüberliegende Stössel weist einen konkav nach innen gewölbt gestalteten Abschnitt auf, der in dem geschlossenen Spritzgießwerkzeug der Austrittsöffnung der Spritzgießdüse gegenüberliegt. In dem geschlossenen Spritzgießwerkzeug ist das einzige Etikett derart angeordnet, dass sein zentrales Durchgangsloch der Austrittsöffnung der Spritzgießdüse unmittelbar gegenüberliegt. Bei geschlossenem Spritzgießwerkzeug wird geschmolzenes Kunststoffmaterial aus der Austrittsdüse der Spritzgießdüse und von dort durch das zentrale Loch des einzigen Etiketts hindurch in den dahinter ausgebildeten konkaven Hohlraum des Stössels eingespritzt, so dass das einzige Etikett an die Düsenwand des ersten Werkzeugteils angepresst wird. Mit diesem Verfahren ist kein Verbundkörper mit einem beidseitig mit Einlegerteilen eingeschlossenen Körper bzw. Kern, insbesondere einem Kunststoffkörper bzw. Kunststoffkern, herstellbar. Zur Vermeidung der sich aus diesem Verfahren nach dem Stand der Technik ergebenden Nachteile wird in der vorgenannten Druckschrift ein Verfahren zur Herstellung eines Behälters durch Spritzgießen unter Verwendung eines aus wenigstens zwei Werkzeugformen gebildeten Spritzgießwerkzeugs vorgeschlagen. Das Spritzgießwerkzeug weist eine mit einer Spritzgießdüse und einem Hohlraum versehene erste Werkzeugform und eine mit einem mehrteiligen Kern versehene zweite Werkzeugform auf. Wenn das Spritzgießwerkzeug geöffnet ist, werden zwei separate Etiketten mittels als "rails" bezeichneten Vorrichtungen auf eine der zweiten Werkzeugform gegenüberliegende Werkzeugwand der ersten Werkzeugform aufgelegt. Hierzu wird ein separates erstes Etikett der beiden separaten Etiketten, das mit einem zentralen Durchgangsloch versehen ist, unmittelbar auf die Werkzeugwand der die Spritzgießdüse enthaltenden ersten Werkzeugform derart aufgelegt, dass das zentrale Durchgangsloch der Austrittsöffnung der Spritzgießdüse unmittelbar gegenüber liegt. Auf die von der Spritzgießdüse abgewandte Seite des separaten ersten Etiketts wird ein unperforiertes, separates, zweites Etikett der beiden separaten Etiketten aufgelegt. Das separate zweite Etikett weist also kein Durchgangsloch auf. Anschließend wird das Spritzgießwerkzeug geschlossen. Dann wird an einen zwischen einem äußeren Kern und einem in seiner Zentralkern-Öffnung aufgenommenen Zentralkern der zweiten Werkzeugform ausgebildeten Ringschlitz ein Vakuum angelegt, so dass die beiden separaten Etiketten ihre Lage relativ zu der Spritzgießdüse beibehalten. Daran anschließend wird schmelzeflüssiger Kunststoff durch die Austrittsöffnung der Spritzgießdüse und von dort unmittelbar in und durch das zentrale Durchgangsloch des separaten ersten Etiketts hindurch auf das separate zweite Etikett gespritzt. Dabei wird bzw. dadurch wird durch die Spritzgießmasse das separate erste Etikett an die erste Werkzeugform und das separate zweite Etikett an die zweite Werkzeugform angepresst, so dass ein Verbundkörper bestehend aus einen Kunststoff-Kern und zwei diesen umgebenden Etiketten ausgebildet wird. Die vorstehenden Verfahren sind vergleichsweise aufwändig, wobei für die Herstellung der entsprechenden Verbundkörper eine vergleichsweise lange Zykluszeit benötigt wird.

In der JP 2007 307769 A ist ein ähnliches Verfahren zur Herstellung eines Verpackungs-Verbundkörpers offenbart. Hierzu wird ein zweiteiliges Spritzgießwerkzeug verwendet, dessen erste Werkzeughälfte relativ zu der ortsfesten zweiten Werkzeughälfte bewegbar ist. Die erste Werkzeughälfte weist eine einen Werkzeugform-Hohlraum auf, der in der Richtung der zweiten Werkzeughälfte offen ist. Die ortsfeste, zweite Werkzeughälfte weist eine Spritzgießdüse zum Einspritzen von schmelzeflüssigem Kunststoff auf. Deren Austrittsöffnung befindet sich in einem in Richtung zur der ersten Werkzeughälfte (konkave Matrize) um eine Höhe vorstehenden Düsenabschnitt der einen Außendurchmesser aufweist. Zur Herstellung des Verbundkörpers werden zwei separate Etiketten in das geöffnete Spritzgießwerkzeug eingelegt, wobei ein separates erstes Etikett der beiden separaten Etiketten ein Durchgangsloch ausweist, und wobei das separate zweite Etikett der beiden separaten Etiketten kein Durchgangsloch aufweist. Das separate erste Etikett wird derart in das geöffnete Spritzgießwerkzeug eingelegt, dass das Durchgangsloch der Austrittsöffnung der Spritzgießdüse koaxial zu derselben gegenüberliegt. Das Durchgangsloch des separaten ersten Etiketts weist einen Innendurchmesser auf, der größer ist als der Außendurchmesser des Düsenabschnitts der Spritzgießdüse. Die Höhe des Düsenabschnitts ist größer als die Wanddicke des ersten Etiketts. Dadurch wird beim Schließen des Spritzgießwerkzeugs der vorstehende Düsenabschnitt durch das Durchgangsloch des separaten ersten Etiketts hindurch auf das separate zweite Etikett gedrückt, wobei Letzteres geringfügig von dem separaten ersten Etikett abgehoben wird. Dadurch bildet sich im Bereich des Durchgangsloches zwischen dem separaten ersten Etikett und dem separaten zweiten Etikett ein ringförmiger Spalt, in den der mittels der Spritzgießdüse eingespritzte schmelzeflüssige Kunststoff zwischen den beiden separaten Etiketten gelangen kann und das unperforierte, separate, zweite Etikett an die konkave Innenwand der bewegbaren ersten Werkzeughälfte (Matrize) drücken kann und zugleich den Werkzeughohlraum ausfüllen und das separate erste Etikett an die Innenwand der ortsfesten zweiten Werkzeughälfte drücken kann. Gemäß einem alternativen Ausführungsbeispiel ist die Anwendung des vorbeschriebenen Verfahrens auch dann möglich, wenn nicht nur die bewegliche erste Werkzeughälfte, sondern auch auch die ortsfeste zweite Werkzeughälfte mit einem Werkzeugform-Hohlraum versehen ist, wobei dann der Düsenabschnitt eine entsprechend größere Höhe aufweist, mit welcher er im geschlossenen Spritzgießwerkzeug in den Werkzeughohlraum vorsteht. Auch das vorstehende Verfahren ist vergleichsweise aufwändig, zumal auch dabei für die Herstellung der entsprechenden Verbundkörper eine vergleichsweise lange Zykluszeit benötigt wird.

Aus der EP 1 504 872 A1 ist ein Verfahren mit den Merkmalen des Oberbegriffs des Anspruches 1 bekannt geworden. Dort werden zwei separate Einlegerteile in Form von zwei unabhängigen Folien, bevor sie in eine geöffnete Spritzgießform überführt werden, durch lösbare Verbindungsmittel temporär miteinander verbunden. Eine erste Folie der beiden Folien weist ein ausgestanztes Loch auf. Die beiden temporär miteinander verbundenen Folien werden als Einheit in die geöffnete Spritzgießform, und dort entweder in eine konkave Außenform (Matrize) der geöffneten Spritzgießform eingelegt oder über eine konvexe Innenform (Patrize) der geöffneten Spritzgießform gestülpt. Die konvexe Innenform weist eine linsenförmige Ausbuchtung auf, die sich von der konkaven Außenform weg erstreckt. Die beiden temporär miteinander verbundenen Folien werden derart als Einheit in die geöffnete Spritzgießform eingelegt, dass das Loch der ersten Folie einer Einspritzdüse der konkaven Außenform (Matrize) unmittelbar gegenüber liegt und dass die zweite Folie, in der Einspritzrichtung des flüssigen Kunststoffes betrachtet, hinter der das Loch aufweisenden ersten Folie liegt. Anschließend wird die Spritzgießform geschlossen und flüssiger Kunststoff wird über die Einspritzdüse der konkaven Außenform (Matrize) durch das Loch der ersten Inlay-Folie auf die zweite Inlay-Folie gespritzt, die im Zuge dessen an die linsenförmige Ausbuchtung der konvexen Innenform (Patrize) der Spritzgießform angedrückt wird. Beim Einspritzen des flüssigen Kunststoffes werden die beiden Folien voneinander zu zwei separaten Folien getrennt, so dass der eingespritzte Kunststoff dazwischen einwandfrei verteilt werden kann. Dieses Verfahren ist ebenfalls vergleichsweise aufwändig. Außerdem besteht dabei, abhängig von den verwendeten wiederlösbaren Verbindungsmitteln, die Gefahr, dass Rückstände oder Reste derselben in dem eingespritzten und verfestigten Kunststoff des fertigen Verbundkörpers verbleiben.

Es ist eine Aufgabe der Erfindung, ein Verfahren der eingangs genannten Art zur Verfügung zu stellen, mit dem die vorstehenden Nachteile vermieden werden und mit dem die Herstellung von Verbundkörpern mit einem beidseitig mit Einlegerteilen eingeschlossenen Körper bzw. Kern, vorzugsweise einem Kunststoffkörper bzw. Kunststoffkern, insbesondere solchen, die mit einer Dekoration und/oder mit einem Hygieneschutz auf ihrer Innen- und Außenseite oder auf ihren voneinander weg weisenden Außenseiten versehen sind, mit einem mehrere Einlegerteile enthaltenden, einteiligen, doppelwandigen Einleger in kürzeren Zykluszeiten im Spritzgießverfahren möglich ist.

Diese Aufgabe wird durch die Merkmale des Anspruches 1 gelöst. Demgemäß betrifft die Erfindung ein Verfahren zur Herstellung eines Verbundkörpers durch Spritzgießen unter Verwendung eines aus wenigstens zwei Werkzeugformen gebildeten Spritzgießwerkzeugs, das eine erste Werkzeugform (Matrize) der Werkzeugformen und eine zweite Werkzeugform (Patrize) der Werkzeugformen enthält, wobei die erste Werkzeugform einen Werkzeugform-Hohlraum aufweist, der in Richtung der zweiten Werkzeugform offen ist und wobei das Spritzgießwerkzeug von einer Werkzeug-Öffnungsstellung, in der die erste Werkzeugform und die zweite Werkzeugform voneinander abgehoben sind, in einer, vorzugsweise linearen, Werkzeug-Bewegungsrichtung in eine Werkzeug-Schließstellung überführbar ist, und umgekehrt, in der die erste Werkzeugform und die zweite Werkzeugform unter Einschließen eines den Werkzeugform-Hohlraum enthaltenden Werkzeug-Hohlraums zur Aufnahme der Einlegerteile und der fließfähigen, verfestigbaren Masse über eine Werkzeugtrennebene getrennt aneinander anliegen, wobei in einem ersten Verfahrensschritt die Einlegerteile in das sich in seiner Öffnungsstellung befindliche Werkzeug eingelegt werden, von denen der zweite Einlegerteil ein mit einem umlaufenden Lochrand begrenztes Loch mit einem Loch-Innendurchmesser aufweist, der größer ist als der Austritts-Innendurchmesser der Masse-Austrittsöffnung der Werkzeug-Düse, wobei der zweite Einlegerteil derart in die erste Werkzeugform des sich in seiner Werkzeug-Öffnungsstellung befindlichen Spritzgießwerkzeugs eingelegt wird, dass das Loch der Masse-Austrittsöffnung der Werkzeug-Düse unmittelbar gegenüberliegt, und wobei der zweite Einlegerteil derart relativ zu der Masse-Austrittsöffnung der Werkzeug-Düse positioniert wird, dass bei einer Projektion des Loches und der Masse-Austrittsöffnung in eine gedachte gemeinsame Projektionsebene, die senkrecht zu der Werkzeug-Bewegungsrichtung und/oder parallel zu der Werkzeug-Trennebene ausgebildet ist, der Lochrand des Loches die Masse-Austrittsöffnung der Werkzeug-Düse in einem radialen Abstand vollumfänglich umgreift, und von denen der erste Einlegerteil den zweiten Einlegerteil auf dessen der ersten Anlagefläche der ersten Werkzeugform gegenüberliegenden Seite unter vollständiger Überdeckung des Loches des zweiten Einlegerteils übergreift, und wobei der erste Einlegerteil und der zweite Einlegerteil Bestandteile eines einteiligen, doppelwandigen Einlegers sind, der im Zuge des ersten Verfahrensschritts, vorzugsweise in eine einzige Werkzeugform der Werkzeugformen bzw. ausschließlich in eine Werkzeugform der Werkzeugformen, und zwar, entweder in die erste Werkzeugform oder in die zweite Werkzeugform eingelegt wird, wonach in einem zweiten Verfahrensschritt das Spritzgießwerkzeug in seine Werkzeug-Schließstellung überführt wird, wonach in einem dritten Verfahrensschritt die fließfähige, verfestigbare Masse durch den Massekanal hindurch und aus der Masse-Austrittsöffnung der Werkzeug-Düse in Richtung der ersten Werkzeugform unmittelbar auf den ersten Einlegerteil aufgespritzt wird, sodass dadurch der erste Einlegerteil und der zweite Einlegerteil unter Ausbildung eines zu der Masse-Austrittsöffnung der Düse und/oder zu einem Zentrum des Lochs offenen, ringförmigen, vorzugsweise im Querschnitt keilförmigen, Hohlraums auseinandergespreizt werden, wobei, vorzugsweise gleichzeitig, die fließfähige, verfestigbare Masse einen ersten Teilbereich des ersten Einlegerteils an die Vertiefung der ersten Werkzeugform (Matrize) andrückt und einen zweiten Teilbereich des zweiten Einlegerteils an die zweite Anlagefläche der zweiten Werkzeugform (Patrize) andrückt, wobei nach einem Verfestigen der Masse ein Verbundkörper erhalten wird, bei dem ein aus der verfestigten Masse gebildeter Verbundkörper-Kern von dem ersten Einlegerteil und dem zweiten Einlegerteil teilweise oder vollständig umschlossen ist, wonach in einem vierten Verfahrensschritt das Spritzgießwerkzeug von seiner Werkzeug-Schließstellung in seine Werkzeug-Öffnungsstellung überführt wird, wobei oder wonach der fertige Verbundkörper entweder aus dem Spritzgießwerkzeug entnommen wird oder schwerkraftbedingt aus dem Spritzgießwerkzeug fällt, wobei erfindungsgemäß der Werkzeugform-Hohlraum der ersten Werkzeugform eine, vorzugsweise eine konkave, insbesondere linsenförmige Innenkontur aufweisende, Vertiefung aufweist, die sich ausgehend von einer den Werkzeugform-Hohlraum begrenzenden und zur Anlage eines ersten Einlegerteils von Einlegerteilen bestimmten ersten Anlagefläche nach innen bzw. von der zweiten Werkzeugform weg erstreckt, und wobei die zweite Werkzeugform in einem der Vertiefung der ersten Werkzeugform gegenüberliegenden Werkzeugform-Bereich eine, vorzugsweise konvexe, insbesondere linsenförmige, Außenkontur aufweisende, Werkzeug-Düse aufweist, die einen Massekanal zum Zuführen einer fließfähigen, verfestigbaren Masse umfasst, der in eine Masse-Austrittsöffnung der Werkzeug-Düse mündet, die einen Austritts-Innendurchmesser aufweist, vorzugsweise wobei die Werkzeug-Düse über eine zur Anlage eines zweiten Einlegerteils der Einlegerteile bestimmte zweite Anlagefläche der zweiten Werkzeugform in Richtung der ersten Werkzeugform vorsteht, und wobei der im Zuge des ersten Verfahrensschritts entweder in die erste Werkzeugform oder in die zweite Werkzeugform eingelegte einteilige, doppelwandige Einleger derart ausgebildet ist, dass sein erster Einlegerteil und sein zweiter Einlegerteil über einen Einleger-Verbindungsteil einteilig und materialgleich miteinander verbunden sind, wobei der Einleger-Verbindungsteil im Zuge des Einspritzens der fließfähigen, verfestigbaren Masse von dieser umspritzt wird, so dass in dem fertigen Verbundkörper der mit dem ersten Einlegerteil und mit dem zweiten Einlegerteil einteilig und materialgleich verbundene Einleger-Verbindungsteil kraftschlüssig oder formschlüssig oder stoffschlüssig eingebunden ist.

Die neuartige Lösung besteht insbesondere darin, dass, vorzugsweise gefaltete bzw. durch Falten hergestellte, doppelwandige einteilige Einleger (z.B. eine IML-Folie), die einteilig und materialgleich über einen Einleger-Verbindungsteil verbunden sind, also aus einem Stück hergestellt sind, einseitig, also in eine einzige Werkzeughälfte der beiden Werkzeughälften, vorzugsweise auf der der Entformungsseite gegenüberliegenden Entnahmeseite des Spritzgießwerkzeugs, eingelegt werden können. Dadurch kann bereits während des Öffnens des Spritzgießwerkzeugs auf der Matrizen- bzw. Entnahmeseite der fertige Verbundkörper entnommen werden und zeitparallel bzw. gleichzeitig kann auf der Patrizen- bzw. Entformungsseite des Spritzgießwerkzeugs ein einteiliger, doppelwandiger Einleger eingelegt werden, vorzugsweise dessen Wandteile im Doppelwandbereich aufeinander- bzw. aneinander liegen. Dadurch kann eine signifikante Verkürzung der Zykluszeit gegenüber dem Stand der Technik erreicht werden.

Durch eine spezielle Anguss- bzw. Düsen-Geometrie wird erreicht, dass sich die auf der Matrizenseite bzw. Entnahmeseite des Spritzgießwerkzeugs eingelegten und dort auf- bzw. aneinander liegenden Einlegerteile voneinander durch die Schmelze trennen und die Schmelze, zwischen den Einlegerteilen einfließend, den sich dabei dort ausbildenden Hohlraum füllen kann. Durch die Erfindung ist es möglich, ohne Zykluszeitverlust Doppelwandbereiche bildende Einlegerteile von einteiligen, doppelwandigen Einlegern mit fließfähiger, verfestigbarer Masse, insbesondere thermoplastischer Schmelze, zu hinterspritzen, so dass ein Verbundkörper mit einem beidseitig mit Einlegerteilen eingeschlossenen Körper bzw. Kern, insbesondere einem Kunststoffkörper bzw. Kunststoffkern, hergestellt wird. Es ergeben sich diverse neue Anwendungsmöglichkeiten im Bereich von Dekorationen, Barrieren, Membranen und anderen Anwendungen durch sich mit dem Kernmaterial dauerhaft verbindende Einlegerteile und/oder durch von dem Kernmaterial wieder lösbare Einlegerteile.

Dadurch, dass der im Zuge des ersten Verfahrensschritts entweder in die erste Werkzeugform oder in die zweite Werkzeugform eingelegte einteilige, doppelwandige Einleger derart ausgebildet ist, dass sein erster Einlegerteil und sein zweiter Einlegerteil über einen Einleger-Verbindungsteil einteilig und materialgleich miteinander verbunden sind, wobei der Einleger-Verbindungsteil im Zuge des Einspritzens der fließfähigen, verfestigbaren Masse von dieser umspritzt wird, so dass in dem fertigen Verbundkörper der mit dem ersten Einlegerteil und mit dem zweiten Einlegerteil einteilig und materialgleich verbundene Einleger-Verbindungsteil kraftschlüssig oder formschlüssig oder stoffschlüssig eingebunden ist, kann das aufwändige Verbinden der Einlegerteile vor ihrem Einlegen in das geöffnete Spritzgießwerkzeug gemäß dem Stand der Technik entfallen.

Gemäß einer besonders bevorzugten Verfahrensvariante kann vorgesehen sein, dass im Zuge des ersten Verfahrensschrittes der einteilige, doppelwandige Einleger mit seinen unmittelbar aneinander liegenden, zumindest teilweise voneinander abhebbaren bzw. voneinander lösbaren, Einlegerteilen in die erste Werkzeugform oder in die zweite Werkzeugform eingelegt wird und/oder der einteilige, doppelwandige Einleger derart in die erste Werkzeugform oder in die zweite Werkzeugform eingelegt wird, dass seine Einlegerteile vor dem Aufspritzen der fließfähigen, verfestigbaren Masse zumindest teilweise voneinander abhebbar bzw. voneinander lösbar unmittelbar aneinander liegen.

Gemäß einer vorteilhaften Weiterbildung des Verfahrens kann vorgesehen sein, dass während des Überführens des Spritzgießwerkzeugs in seine Schließstellung oder nach dem Überführen des Spritzgießwerkzeugs in seine Schließstellung, und vor dem Aufspritzen der fließfähigen, verfestigbaren Masse unmittelbar auf den ersten Einlegerteil, die Werkzeug-Düse und der erste Einlegerteil relativ zueinander aufeinander zu bewegt werden, so dass der erste Einlegerteil mittels der Werkzeug-Düse zumindest teilweise von dem zweiten Einlegerteil abgehoben wird, wodurch ein zu der Masse-Austrittsöffnung der Werkzeug-Düse hin offener, ringförmiger, vorzugsweise, im Querschnitt keilförmiger, Spalt zwischen dem ersten Einlegerteil und dem zweiten Einlegerteil ausgebildet wird, wobei erst anschließend die fließfähige, verfestigbare Masse auf den zweiten Einlegerteil aufgespritzt wird. Dadurch kann eine erhöhte Sicherheit bezüglich des voneinander Ablösens der beiden gegenüberliegenden Einlegerteile und ihres Aufspreizens erreicht werden, so dass sich schon vor dem Einspritzen der fließfähigen, verfestigbaren Masse in die Kavität bzw. schon vor dem Aufspritzen der fließfähigen, verfestigbaren Masse auf den ersten Einlegerteil ein, vorzugsweise im Querschnitt keilförmiger, Spalt bzw. Schlitz ausbildet, was das anschließende Einfließen der fließfähigen, verfestigbaren Masse, nach ihrem Aufprallen auf den ersten Einlegerteil erleichtert.

Gemäß einer bevorzugten Ausführungsvariante kann vorgesehen sein, dass im Zuge des ersten Verfahrensschrittes der einteilige, doppelwandige Einleger in den Werkzeugform-Hohlraum der ersten Werkzeugform eingelegt wird. Vorzugsweise erfolgt also das Einlegen des einteiligen, doppelwandigen Einlegers auf der sogenannten Entnahmeseite, insbesondere auf der Matrizenseite, des Spritzgießwerkzeugs. Dadurch lässt sich eine weitere Verkürzung der Zykluszeit erreichen. Dies kann dadurch erreicht werden, dass während des Zeitraums, in dem der fertige Verbundkörper aus dem Spritzgießwerkzeug auf der sogenannten Entformungsseite, insbesondere auf der Patrizen-Seite, entformt werden muss, bereits auf der gegenüberliegenden Seite, also auf der Entnahmeseite, insbesondere auf der Matrizen-Seite, der einteilige, doppelwandige Einleger in die Matrize eingelegt wird.

Gemäß einer Ausführungsvariante kann vorgesehen sein, dass der einteilige, doppelwandige Einleger aus einem flächigen Körper oder aus einem Flachmaterial oder aus einer Folie, vorzugsweise durch Falten oder Biegen, hergestellt ist oder wird, bevor er im Zuge des ersten Verfahrensschrittes in das sich in seiner Öffnungsstellung befindliche Spritzgießwerkzeug eingelegt wird. Dies ermöglicht eine kostengünstige und schnelle Herstellung des Verbundkörpers.

Gemäß einer Weiterbildung kann vorgesehen sein, dass der erste Einlegerteil und/oder der zweite Einlegerteil und die fließfähige, verfestigbare Masse hinsichtlich ihrer physikalischen und/oder chemischen Eigenschaften derart ausgewählt werden, dass der erste Einlegerteil und/oder der zweite Einlegerteil in dem fertigen Verbundkörper, mit dem aus der verfestigten Masse gebildeten Verbundkörper-Kern entweder dauerhaft oder teilweise oder vollständig lösbar verbunden ist oder sind. In dem zuletzt genannten Fall kann bzw. können der, insbesondere als Hygieneschutz fungierende, erste Einlegerteil und/oder der, insbesondere als Hygieneschutz fungierende, zweite Einlegerteil von dem Verbundkörper-Kern, vorzugswiese manuell, teilweise oder vollständig abgelöst werden. Dies insbesondere, um einen integrierten, insbesondere herausnehmbaren oder herausbrechbaren oder herausklappbaren, Körper, beispielsweise ein Essbesteck, unter vorteilhaften Hygieneverhältnissen benutzen zu können. Außerdem ergeben sich dadurch vorteilhafte Recyclingverhältnisse.

Gemäß einer bevorzugten Weiterbildung kann vorgesehen sein, dass der einteilige, doppelwandige Einleger und/oder die fließfähige, verfestigbare Masse aus einem thermoplastischen Material, insbesondere aus einem thermoplastischen Kunststoff, gebildet sind oder bestehen.

Bei dem einteiligen, doppelwandigen Einleger kann es sich um eine, vorzugsweise thermoplastische, Folie handeln.

Der einteilige, doppelwandige Einleger, kann teilweise oder vollständig aus einem oder mehreren starren Körpern, beispielsweise aus Holz oder Metall, bestehen, vorzugsweise wobei zumindest derjenige Einlegerteil, auf den die fließfähige, verfestigbare Masse aufgespritzt wird, derart ausgebildet ist, dass er sich unter den beim Aufspritzen der fließfähigen, verfestigbaren Masse auftretenden Kräften elastisch oder plastisch verformt.

Gemäß einer bevorzugten Variante kann vorgesehen sein, dass der auf einer ersten Seite seines ersten Einlegerteils mit einer ersten Dekoration versehene, beispielsweise bedruckte oder beschriftete, und auf seiner davon weg weisenden zweiten Seite seines zweiten Einlegerteils mit einer zweiten Dekoration versehene, beispielsweise bedruckte oder beschriftete, einteilige, doppelwandige Einleger im Zuge des ersten Verfahrensschrittes derart in das sich in seiner Werkzeug-Öffnungsstellung befindliche Spritzgießwerkzeug eingelegt wird, dass die mit der ersten Dekoration versehene erste Seite und die mit der zweiten Dekoration versehene zweite Seite voneinander weg weisende Außenseiten, insbesondere des Verbundkörpers, ausbilden. Dadurch lassen sich vorteilhafte Dekorationen verwirklichen.

Insbesondere dann, wenn es sich bei dem erfindungsgemäß hergestellten Verbundkörper um einen Deckel für einen Behälter handelt, der gleich oder ähnlich gestaltet ist, wie in der DE 10 2018 127 380 A1 offenbart, kann der dort offenbarte Essbesteckteil in Form eines Löffels vorteilhaft auf seiner Innenseite mit dem zweiten Einlegerteil und auf seiner Außenseite vorteilhaft mit dem ersten Einlegerteil des einteiligen zweiten Einlegers wiederlösbar, hygienisch vorteilhaft abgedeckt sein. Ein Benutzer, der den als Löffelteil gestalteten Essbesteckteil zum Essen benutzen möchte, kann den ersten bzw. oberen Einlegerteil und den zweiten bzw. unteren Einlegerteil, bei denen es sich jeweils um eine, vorzugsweise mit einer Dekoration versehene, Folie handeln kann, manuell entfernen und kann anschließend den Löffelteil zum Essen aus dem Deckel herauslösen bzw. aus dem Deckelteil herausklappen.

Es versteht sich, dass die vorstehenden Maßnahmen und Merkmale im Rahmen der Ausführbarkeit beliebig kombinierbar sind.

Weitere Vorteile, Merkmale und Gesichtspunkte der Erfindung können den Ansprüchen und dem nachfolgenden Beschreibungsteil entnommen werden, in dem eine vorteilhafte Ausführungsvariante des Verfahrens am Beispiel alternativer Ausführungsbeispiele von einteiligen, doppelwandigen Einlegern beschrieben ist.

Es zeigen:
- Figur 1: ein erstes Ausführungsbeispiel eines Folienkörpers zur Herstellung eines einteiligen, doppelwandigen, ersten Einlegers;
- Figur 2: den Folienkörper gemäß Figur 1 in einer teilweise gefalteten Darstellung;
- Figur 3: einen teilweise unterbrochenen Querschnitt eines einteiligen, doppelwandigen, ersten Einlegers, der aus dem Folienkörper gemäß Figur 1 durch Falten hergestellt ist;
- Figur 4.1: eine stark vergrößerte Darstellung des zwei freie Einleger-Enden aufweisenden Endbereichs der Endbereiche des einteiligen, doppelwandigen, gefalteten, ersten Einlegers gemäß Figur 3;
- Figur 4.2: eine stark vergrößerte Darstellung des eine Faltung bzw. Biegung aufweisenden Endbereichs der Endbereiche des einteiligen, doppelwandigen, ersten Einlegers gemäß Figur 3;
- Figur 5: einen Querschnitt eines in eine Öffnungsstellung überführten Spritzgießwerkzeugs, das eine Matrize und eine Patrize umfasst;
- Figur 6: einen Querschnitt gemäß Figur 5, wobei nun der einteilige, doppelwandige, erste Einleger gemäß Figur 3 in die Matrize eingelegt ist;
- Figur 7: einen Querschnitt des nun in seine Schließstellung überführten Spritzgießwerkzeugs mit dem darin eingelegten einteiligen, doppelwandigen, ersten Einleger;
- Figur 8: das Spritzgießwerkzeug gemäß Figur 7, wobei nun über Schmelzekanäle und über eine Werkzeug-Düse der Patrize Schmelze eines thermoplastischen Kunststoffs eingespritzt wird, in einer ersten Einspritzphase;
- Figur 9: das Spritzgießwerkzeug gemäß Figur 8, wobei nun die Einspritz- und ggf. Nachdruckphase abgeschlossen ist;

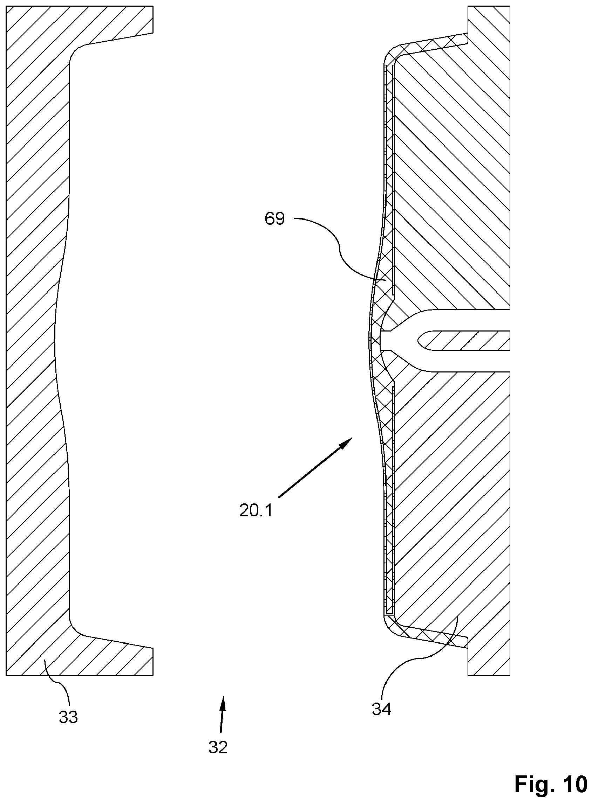

- Figur 10: das wieder in seine Öffnungsstellung überführte Spritzgießwerkzeug, wobei der fertige erste Verbundkörper an der Patrize anhaftet;
- Figur 11: das sich in seiner Öffnungsstellung befindliche Spritzgießwerkzeug, wobei nun der fertige erste Verbundkörper aus der Patrize entnommen wurde;
- Figur 12: eine dreidimensionale Darstellung des fertigen ersten Verbundkörpers in Form eines ersten Deckels für einen nicht gezeigten Behälter;
- Figur 13: eine dreidimensionale Halb-Darstellung des fertigen ersten Verbundkörpers, wobei nun die beiden Einlegerteile des einteiligen, ersten Einlegers von dem aus dem eingespritzten thermoplastischen Kunststoff gebildeten Kunststoffkern abgelöst sind, während die beiden Einlegerteil des einteiligen ersten Einlegers über einen zwischen seinen beiden Einlegerteilen ausgebildeten ersten Einleger-Verbindungsteil mit dem Kunststoffkern innig verbunden bleiben;
- Figur 14: ein zweites Ausführungsbeispiel eines Folienkörpers zur Herstellung eines einteiligen, doppelwandigen, zweiten Einlegers, wobei im Unterschied zu dem Folienkörper gemäß dem in Figur 1 gezeigten ersten Ausführungsbeispiel nun der mit dem Loch versehene Einlegerteil die Form eines Löffels aufweist;

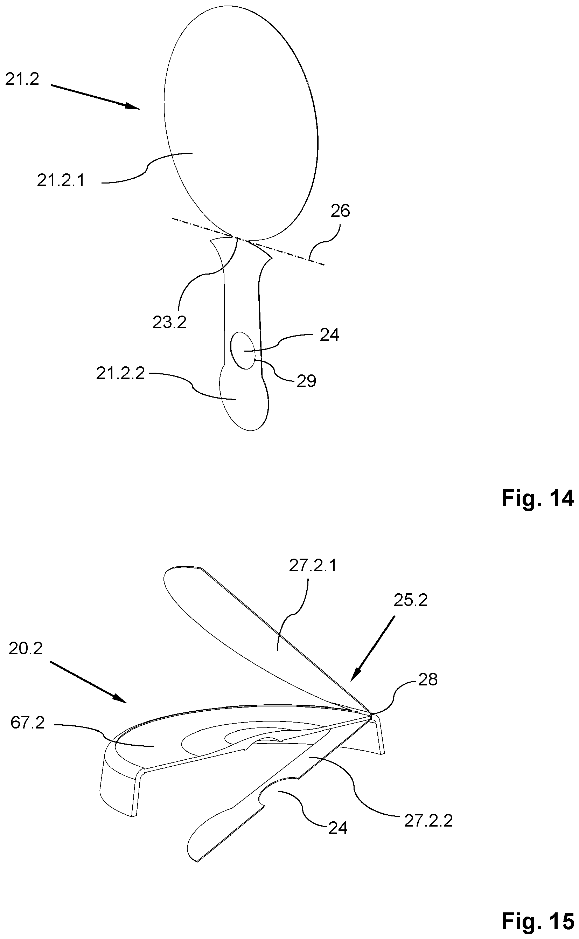

- Figur 15: eine dreidimensionale Halb-Darstellung eines aus einem einteiligen, doppelwandigen, zweiten Einlegers hergestellten, fertigen, zweiten Verbundkörpers in Form eines zweiten Deckels für einen nicht gezeigten Behälter, wobei der zweite Einleger aus dem Folienkörper gemäß Figur 14 durch Falten hergestellt wurde, und wobei die beiden Einlegerteile des einteiligen, zweiten Einlegers von dem aus dem eingespritzten thermoplastischen Kunststoff gebildeten Kunststoffkern abgelöst sind, während die beiden Einlegerteile des einteiligen zweiten Einlegers über einen zwischen seinen beiden Einlegerteilen ausgebildeten zweiten Einleger-Verbindungsteil mit dem Kunststoffkern innig verbunden bleibt.

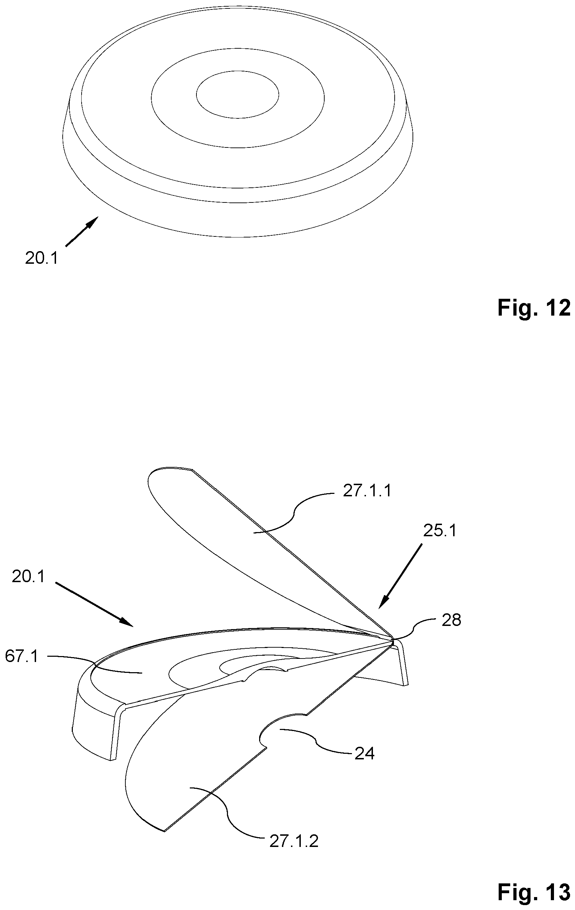

Zur Herstellung des in Figur 12 gezeigten ersten Verbundkörpers 20.1, wird von einem ersten Folienkörper 21.1 ausgegangen, der in Figur 1 gezeigt ist. Der erste Folienkörper 21.1 ist aus einer thermoplastischen Folie, insbesondere aus einer Folienbahn, beispielsweise durch Ausstanzen, hergestellt. Der erste Folienkörper 21.1 umfasst einen ersten Folienkörperteil 22.1.1 und einen zweiten Folienkörperteil 22.1.2, die über einen ersten Folien-Verbindungskörperteil 23.1 einteilig und materialgleich miteinander verbunden sind. Der erste Folienkörperteil 22.1.1 und der zweite Folienkörperteil 22.1.2 haben beide die Gestalt bzw. Außenkontur einer im Wesentlichen kreisförmigen Scheibe. Der erste Folienkörperteil 22.1.1 besteht durchgehend aus Vollmaterial. Der zweite Folienkörperteil 22.1.2 weist in seinem Zentrum ein, vorzugsweise kreisrundes, Loch 24 auf, weist also im Wesentlichen die Gestalt einer ringförmigen Lochscheibe auf.

Ausgehend von dem in Figur 1 gezeigten ersten Folienkörper 21.1 werden zur Herstellung eines einteiligen, doppelwandigen, ersten Einlegers 25.1 der erste Folienkörperteil 22.1.1 und der zweite Folienkörperteil 22.1.2 um eine im Bereich des ersten Folien-Verbindungskörperteils 23.1 angeordnete Schwenkachse 26 derart gefaltet, dass der erste Folienkörperteil 22.1.1 und der zweite Folienkörperteil 22.1.2 unmittelbar aneinander liegen oder in einem geringen Abstand zueinander gegenüberliegen. Der Faltungsvorgang ist in Figur 2 in einer Zwischenphase veranschaulicht. In Figur 3 ist der fertig gefaltete einteilige, doppelwandige, erste Einleger 25.1 in einem teilweise unterbrochenen Querschnitt gezeigt. In den Figuren 4.1 und 4.2 sind dessen Endbereiche in einer stark vergrößerten Darstellung gezeigt. Daraus ist ersichtlich, dass der einteilige, doppelwandige, erste Einleger 25.1 zwei Einlegerteile 27.1.1, 27.1.2, umfasst, und zwar einen ersten Einlegerteil 27.1.1, der aus dem ersten Folienkörperteil 22.1.1 gebildet wurde bzw. ist, und einen zweiten Einlegerteil 27.1.2, der aus dem zweiten Folienkörperteil 22.1.2 mit dem Loch 24 gebildet wurde bzw. ist. Der erste Einlegerteil 27.1.1 und der zweite Einlegerteil 27.1.2 des einteiligen, doppelwandigen, ersten Einlegers 25.1 liegen unmittelbar aneinander an. Der erste Einlegerteil 27.1.1 und der zweite Einlegerteil 27.1.2 sind über einen Einleger-Verbindungsteil 28 einteilig und materialgleich verbunden, der aus dem ersten Folien-Verbindungskörperteil 23.1 gebildet wurde bzw. ist. Das Loch 24 des zweiten Einlegerteils 27.1.2 ist von einem, vorzugsweise kreisrunden, umlaufenden Lochrand 29 begrenzt, der einen Loch-Innendurchmesser 30 aufweist.

Zur Herstellung des in Figur 12 gezeigten ersten Verbundkörpers 20.1, wird ein Spritzgießwerkzeug 31 verwendet. Dieses ist in dem in Figur 5 gezeigten Querschnitt in einer Öffnungsstellung 32 gezeigt. Das Sprießgießwerkzeug 31 umfasst die in Figur 5 links gezeigte erste Werkzeugform 33 und umfasst die in Figur 5 rechts gezeigte zweite Werkzeugform 34. Bei der ersten Werkzeugform handelt es sich um eine Matrize 33. Bei der zweiten Werkzeugform handelt es sich um eine Patrize 34.

Die Matrize 33 weist einen Werkzeugform-Hohlraum 36 auf, der von einem umlaufenden Werkzeugform-Rand 37 und einem Werkzeugform-Boden 38 begrenzt ist. Der umlaufende Werkzeugform-Rand 37 erstreckt sich ausgehend von dem Werkzeugform-Boden 38 von diesem quer in Richtung der Patrize 34 weg, Die Matrize 33 weist also den in Richtung der Patrize 34 offenen Werkzeugform-Hohlraum 36 auf. Der Werkzeugform-Boden 38 weist eine ringförmige erste Anlagefläche 39 auf. Die erste Anlagefläche 39 ist, wie gezeigt, beispielsweise im Wesentlichen eben gestaltet. Ausgehend von der ersten Anlagefläche 39 erstreckt sich ungefähr im Zentrum der Matrize eine linsenförmige, konkave Vertiefung 40 nach innen bzw. von der Patrize 34 weg.

Die Patrize 34 umfasst in einem der Vertiefung 40 der Matrize 33 gegenüberliegenden Werkzeugform-Bereich 41 eine Werkzeug-Düse 42. Die Werkzeug-Düse 42 weist eine Schmelze-Austrittsöffnung 43 auf und umfasst einen Schmelze-Kanal 44 zum Zuführen einer thermoplastischen Schmelze 63, insbesondere einer Schmelze 63 eines thermoplastischen Kunststoffes. In dem Schmelze-Kanal 44 ist eine Schmelzeführungsdüse 45 angeordnet. Während des Einspritzvorgangs fließt die Schmelze 63 durch die Schmelze-Kanäle 44.1, 44.2 der Schmelzeführungsdüse 45 in Richtung der Schmelze-Austrittsöffnung 43. Die Schmelze-Austrittsöffnung 43 der Werkzeug-Düse 42 weist einen Austritts-Innendurchmesser 46 auf. Dieser ist sehr viel kleiner als der Loch-Innendurchmesser 30 des Lochs 24 des zweiten Einlegerteils 27.1.2 Die Werkzeug-Düse 42 weist eine linsenförmige, konvexe Außenkontur 47 auf. Die Werkzeug-Düse 42 erstreckt sich ausgehend von einer ringförmigen zweiten Anlagefläche 48 in Richtung der Matrize 33. Die Werkzeug-Düse 42 weist an ihrer Basis 49 ihren größten Außendurchmesser 50 auf. Dieser Außendurchmesser 50 ist, vorzugsweise geringfügig, kleiner als der Loch-Innendurchmesser 30 des Lochs 24 des zweiten Einlegerteils 27.1.2. Die zweite Anlagefläche 48 der Patrize 34 liegt der ersten Anlagefläche 39 der Matrize 33 gegenüber. Die zweite Anlagefläche 39 ist, wie gezeigt, beispielsweise im Wesentlichen eben, gestaltet. Im Ausführungsbeispiel sind die erste Anlagefläche 39 der Matrize 33 und die gegenüberliegende zweite Anlagefläche 48 der Patrize 34 im Wesentlichen parallel zueinander ausgebildet.

Zur Herstellung des in Figur 12 gezeigten ersten Verbundkörpers 20.1 wird, wie in Figur 6 gezeigt, der einteilige, doppelwandige, erste Einleger 25.1 in den Werkzeugform-Hohlraum 36 der Matrize 33 bzw. auf der Entformungsseite 51 des Spritzgießwerkzeugs 31 derart in den Werkzeugform-Hohlraum 36 der ersten Werkzeugform/Matrize 33 des sich in seiner Werkzeug-Öffnungsstellung 32 befindlichen Spritzgießwerkzeugs 31 eingelegt, dass er mit seinem ersten Einlegerteil 27.1.1 an die erste Anlagefläche 39 der ersten Werkzeugform/Matrize 33 angelegt wird. Dabei kann der einteilige erste Einleger 25.1 in üblicher Art und Weise, beispielsweise unter Einwirkung von elektrostatischen Kräften, über seinen ersten Einlegerteil 27.1.1 an der ersten Anlagefläche 39 anliegend gehalten werden, kann also dort anhaften. Anders ausgedrückt, wird der einteilige, doppelwandige, erste Einleger 25.1 in den Werkzeugform-Hohlraum 36 der Matrize 33 bzw. auf der Entformungsseite 51 des Spritzgießwerkzeugs 31 derart in den Werkzeugform-Hohlraum 36 der ersten Werkzeugform/Matrize 33 des sich in seiner Werkzeug-Öffnungsstellung 32 befindlichen Spritzgießwerkzeugs 31 eingelegt, dass das Loch 24 des zweiten Einlegerteils 27.1.2 der Masse-Austrittsöffnung 43 der Werkzeug-Düse 42 unmittelbar gegenüberliegt. Dabei wird der einteilige, doppelwandige, erste Einleger 25.1 derart eingelegt, dass sein zweiter Einlegerteil 27.1.2 relativ zu der Schmelze-Austrittsöffnung 43 der Werkzeug-Düse 42 derart positioniert wird bzw. ist, dass bei einer Projektion des Loches 24 und der Schmelze-Austrittsöffnung 43 in eine gemeinsame Projektionsebene, die senkrecht zu der Werkzeug-Bewegungsrichtung 53 und/oder parallel zu der Werkzeug-Trennebene 54 ausgebildet ist, der Lochrand 29 des Loches 24 die Schmelze-Austrittsöffnung 43 der Werkzeug-Düse 42 in einem radialen Abstand vollumfänglich umgreift. In dem gezeigten Ausführungsbeispiel wird der einteilige, doppelwandige, erste Einleger 25.1 derart eingelegt, dass das Zentrum 56 des Lochs 24 seines zweiten Einlegerteils 27.1.2 etwa koaxial zu der Längsachse 56 der Werkzeug-Düse 42 angeordnet ist. Wie ebenfalls aus Figur 6 ersichtlich, übergreift der erste Einlegerteil 27.1.1 den das Loch 24 aufweisenden zweiten Einlegerteil 27.2.1 auf dessen der ersten Anlagefläche 39 der ersten Werkzeugform/Matrize 33 gegenüberliegenden Seite unter vollständiger Überdeckung bzw. Abdeckung des Loches 24 des zweiten Einlegerteils 27.1.2.

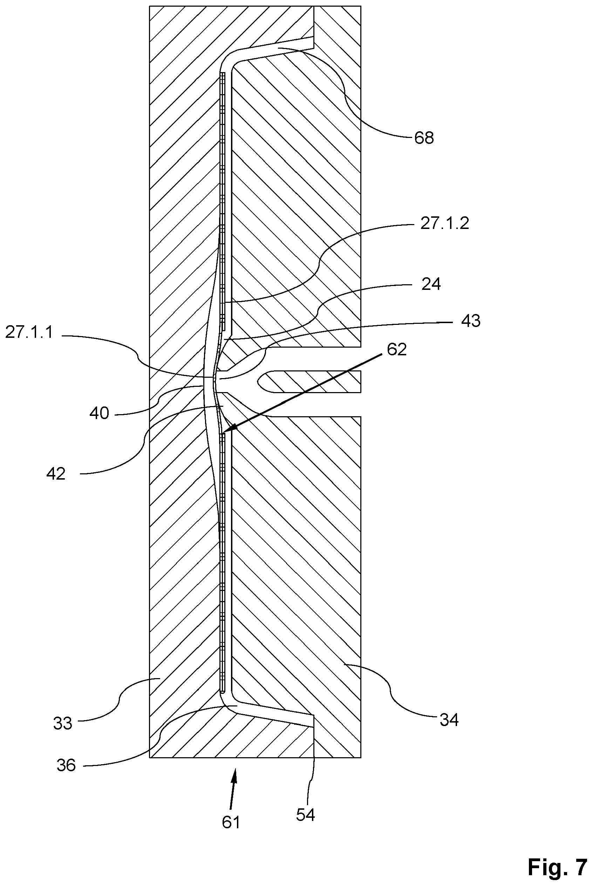

Nach dem Einlegen des einteiligen, doppelwandigen, ersten Einlegers 25.1 in den Werkzeugform-Hohlraum 36 der Matrize 33 des offenen Spritzgießwerkzeugs 31, wird das Spritzgießwerkzeug 31 in seine Werkzeug-Schließstellung 61 überführt. Hierzu werden die Matrize 33 und die Patrize 34 relativ zueinander in einer linearen Bewegung 53 über nicht gezeigte Linierführungen geführt aufeinander zu bewegt, bis die Matrize 33 und die Patrize 34 in der Werkzeugtrennebene 54 aneinander anliegen. Diese Werkzeug-Schließstellung 61 ist in Figur 7 gezeigt. In dem gezeigten Ausführungsbeispiel steht die Werkzeug-Düse 42 derart über die zweite Anlagefläche 48 der Patrize 34 vor, dass sie im Bereich ihrer Schmelze-Austrittsöffnung 43 an der unmittelbar gegenüberliegenden Seite des nicht mit dem Loch 24 versehenen ersten Einlegerteils 27.1.1 unmittelbar anliegt und zugleich den ersten Einlegerteil 27.1.1 in diesem Bereich geringfügig in die Vertiefung 40 der Matrize 33 drückt. Dadurch wird erreicht, dass der erste Einlegerteil 27.1.1 mittels der Werkzeug-Düse 42 von dem zweiten Einlegerteil 27.1.2 in dem Bereich des Lochrands 29 des Loches 24 geringfügig abgehoben wird, bevor die Schmelze 63 eingespritzt bzw. auf den ersten Einlegerteil 27.1.1 aufgespritzt wird. Dadurch entsteht ein zur der Schmelze-Austrittsöffnung 43 bzw. zu dem Zentrum 55 des Loches 24 hin offener, ringförmiger Spalt 62 zwischen dem ersten Einlegerteil 27.1.1 und dem zweiten Einlegerteil 27.1.2. Dieser Spalt 62 ist, wie in dem Querschnitt gemäß Figur 7 veranschaulicht, keilförmig ausgebildet.

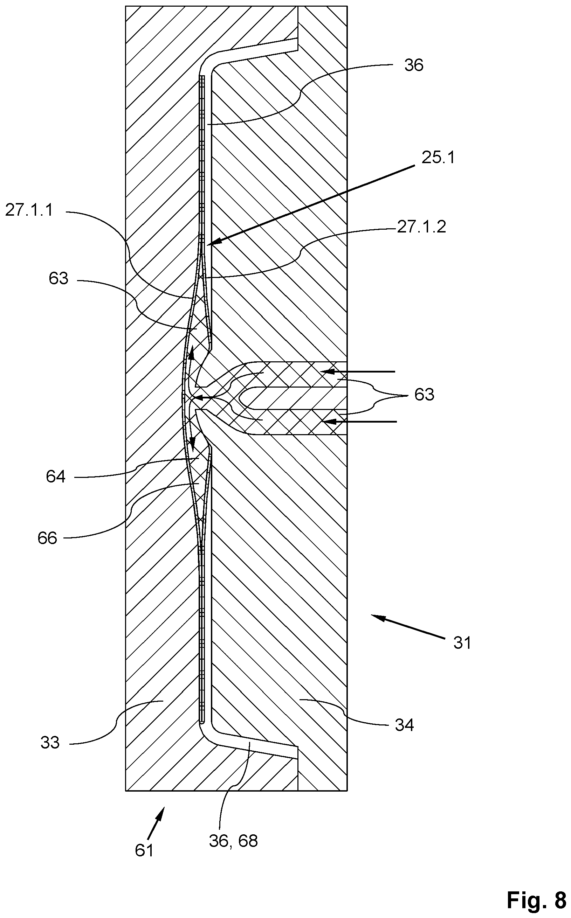

Nach dem Schließen des Spritzgießwerkzeugs 31 wird in das geschlossene Spritzgießwerkzeug 31 eine fließfähige, verfestigbare Masse in Form einer Schmelze 63 eines thermoplastischen Kunststoffes, durch den Schmelzekanal 44 hindurch und aus der Schmelze-Austrittsöffnung 43 der Werkzeug-Düse 42 in Richtung der Matrize 33 unmittelbar auf den ersten Einlegerteil 27.1.1 des einteiligen, doppelwandigen, ersten Einlegers 25.1 aufgespritzt. Dadurch werden der erste Einlegerteil 27.1.1 und der das Loch 24 umfassende zweite Einlegerteil 27.1.2 unter Ausbildung eines zu der Schmelze-Austrittsöffnung 43 der Werkzeug-Düse 42 bzw. zu dem Zentrum 55 des Loches 24 hin offenen, ringförmigen Hohlraums 64 auseinandergespreizt. Dabei drückt die thermoplastische Schmelze 63 aufgrund der wirksamen Drücke bzw. Kräfte einen ersten Teilbereich des ersten Einlegerteils 27.1.1 an die Vertiefung 40 der Matrize 33 an und drückt einen zweiten Teilbereich des mit dem Loch 24 versehenen zweiten Einlegerteils 27.1.2 an die zweite Anlagefläche 48 der Patrize 34 an. Diese Einspritzphase ist in Figur 8 gezeigt. Dabei bildet sich zwischen dem ersten Einlegerteil 27.1.1 und dem das Loch 24 umfassenden zweiten Einlegerteil 27.1.2 ein Schmelze-Kern 66 aus. Die Linsengeometrie der Vertiefung 40 und der Loch-Innendurchmesser 30 des Lochs 24 des zweiten Einlegerteils 27.1.2 sind derart aufeinander abgestimmt gestaltet, dass die aus der Schmelze-Austrittsöffnung 43 der Werkzeug-Düse 42 eingespritzte bzw. ausgespritzte Schmelze 63, nach ihrem Aufprallen auf den ersten Einlegerteil, 27.1.1 umgelenkt wird und im Zuges dessen in einer radialen Richtung nach außen, also von dem Zentrum 55 des Loches 24 weg, gelenkt wird, so dass die Schmelze 63, in radialer Richtung von dem Zentrum 55 des Loches nach außen betrachtet, erst hinter dem Lochrand 29 des Loches 24 des zweiten Einlegerteils 27.1.2 auf dessen Innenoberfläche auftrifft, Dadurch kann es zu keinen Hinterspritzungen des zweiten Einlegers 27.1.2 im Bereich des Lochrandes 29 seines Loches 24 kommen.

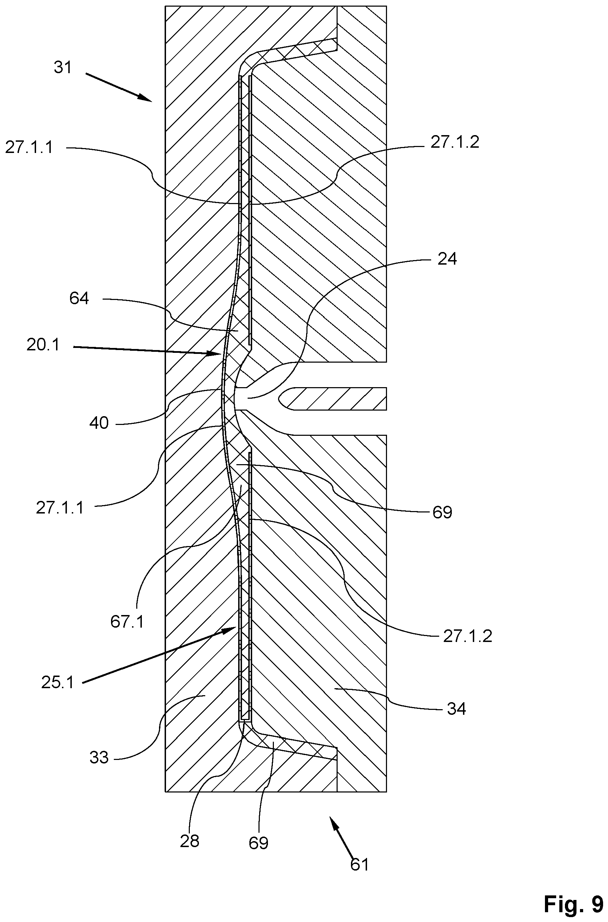

Im Zuge eines fortgesetzten Einspritzens der Schmelze 63 fließt diese weiter radial nach außen. Dadurch wird der erste Einlegerteil 27.1.1 sukzessive bis zu seinem ersten Umfangsrand hin an die erste Anlagefläche 39 der Matrize 33 gedrückt und wird der zweite Einlegerteil 27.1.2 sukzessive bis zu seinem zweiten Umfangsrand hin an die zweite Anlagefläche 48 der Patrize 34 gedrückt. Im Zuge eines fortgesetzten Einspritzens der Schmelze 63 fließt diese radial über die Umfangsränder des ersten und zweiten Einlegerteils 27.1.1, 27.1.2 hinaus in die Randbereiche des Werkzeugform-Hohlraums 36 der Matrize 33 des geschlossenen Spritzgießwerkzeugs 31 bis hin zu der Werkzeugtrennebene 54. Spätestens dann ist der Hohlraum 64 zwischen dem ersten Einlegerteil 27.1.1 und dem zweiten Einlegerteil 27.1.2 vollständig mit eingespritzter thermoplastischer Schmelze 63 ausgefüllt (Figur 9).

Nach dem Einspritzen der Schmelze 63 und ggf. nach einer Nachdruckphase, in welcher die bei der Abkühlung der thermoplastischen Schmelze 63 im Spritzgießwerkzeug 31 auftretende Schwindung ausgeglichen wird, und nach dem abkühlungsbedingt eintretenden Verfestigen der thermoplastischen Schmelze 63 in dem Werkzeug-Hohlraum 36 des Spritzgießwerkzeugs 31, wird das Spritzgießwerkzeug 31 von seiner Werkzeug-Schließstellung 61 wieder in seine Werkzeug-Öffnungsstellung 32 überführt. Dabei bleibt der fertige Verbundkörper 25.1 schrumpfungsbedingt auf dem Kern 35 der Patrize 34 anhaften, also auf der Entformungsseite 51 des Spritzgießwerkzeugs 31.

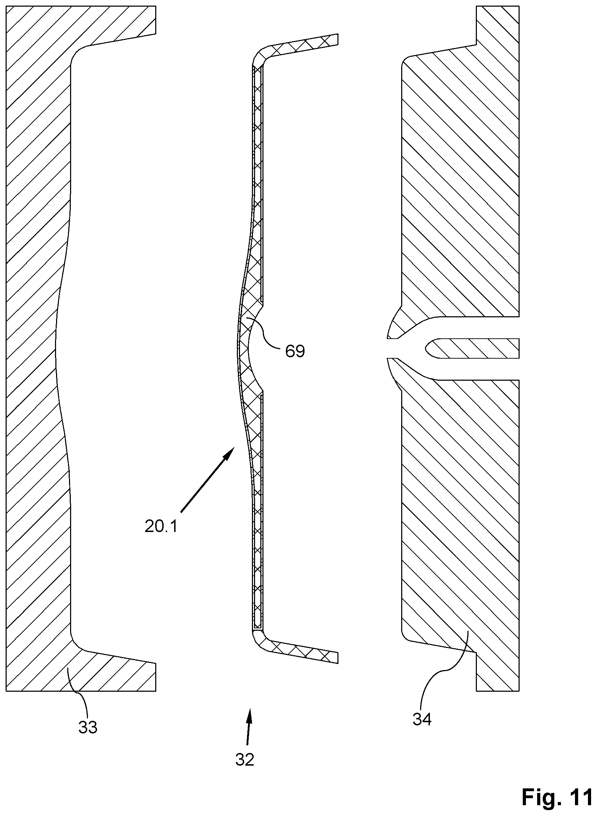

Anschließend wird der fertige Verbundkörper 25.1 mittels nicht gezeigten Entformungsmitteln aus der Patrize 34 entnommen (siehe Figur 11). Der aus dem Spritzgießwerkzeug 31 entfernte fertige Verbundkörper 25.1 ist in Figur 12 gezeigt. Dabei handelt es sich um einen Deckel für einen nicht gezeigten Behälter.

In Figur 13 ist ein Ausführungsbeispiel des halb aufgeschnittenen fertigen Verbundkörpers 25.1 veranschaulicht. Der erste Einlegerteil 27.1.1 und der zweite Einlegerteil 27.1.2 des einteiligen ersten Einlegers 25.1 sind von dem in dem erfindungsgemäßen Verfahren durch Hinterspritzen dieser beiden Einlegerteile 27.1.1, 27.1.2 hergestellten Formteil bzw. Kern 67.1 lösbar. Der mit diesen beiden Einlegerteilen 27.1.1, 27.1.2 einteilig und materialgleich verbundene Einleger-Verbindungsteil 28 ist mit dem umgebenden thermoplastischen Kunststoff, insbesondere innig, vorzugsweise unlösbar, verbunden.

In Figur 14 ist ein zweites Ausführungsbeispiel eines zweiten Folienkörpers 21.2 zur Herstellung eines einteiligen, doppelwandigen, zweiten Einlegers 25.2 gezeigt. Im Unterschied zu dem in Figur 1 gezeigten ersten Folienkörper 21.1, bei dem der mit dem Loch 24 versehene zweite Einlegerteil 27.2.2 eine kreisscheibenförmige Gestalt bzw. Außenkontur aufweist, weist der mit dem Loch 24 versehene zweite Einlegerteil 27.2.2 des zweiten Folienkörpers 21.2 eine löffelförmige Gestalt bzw. Außenkontur auf. Der erste Einlegerteil 27.2.1, 27.2.2 und der Einleger-Verbindungsteil 28 dieses einteiligen zweiten Folienkörpers 21.2 sind gleich gestaltet wie bei dem in Figur 1 gezeigten ersten Ausführungsbeispiel.

In Figur 15 ist ein aus einem einteiligen, doppelwandigen, zweiten Einleger 25.2 hergestellter, halb aufgeschnittener, fertiger, zweiter Verbundkörper 25.2 in Form eines zweiten Deckels für einen nicht gezeigten Behälter gezeigt. Dieser einteilige zweite Einleger 25.2 wurde aus dem in Figur 14 gezeigten zweiten Folienkörper 21.2 durch Falten hergestellt. Der zweite Verbundkörper 25.2 wird in gleicher Art und Weise nach dem erfindungsgemäßen Verfahren hergestellt, wie bereits vorstehend am Beispiel des ersten Verbundkörpers 25.1 beschrieben. Auch bei diesem zweiten Verbundkörper 25.2 sind der erste Einlegerteil 27.2.1 und der zweite Einlegerteil 27.2.2. seines einteiligen zweiten Einlegers 25.2 von dem in dem erfindungsgemäßen Verfahren durch Hinterspritzen dieser beiden Einlegerteile 27.2.1, 27.2.2. hergestellten Formteil bzw. Kern aus thermoplastischem Kunststoff 67.2 ablösbar. Der mit diesen beiden Einlegerteilen 27.2.1, 27.2.2. einteilig und materialgleich verbundene Einleger-Verbindungsteil 28 mit ist dem umgebenden thermoplastischen Kunststoff innig, vorzugsweise unlösbar, verbunden.

Es versteht sich, dass der erste Folienkörperteil 22.1.1 und/oder der zweite Folienkörperteil 22.2.1 des ersten Folienköpers 21.1 gemäß Figur 1 und/oder der erste Folienkörperteil 22.1.1 und/oder der zweite Folienkörperteil 22.2.2 des zweiten Folienköpers 21.2 gemäß Figur 14 mit einer Dekoration versehen sein kann bzw. können. Dabei kann es sich beispielsweise um eine Bedruckung oder Beschriftung handeln. Zu diesem Zwecke wird bzw. ist eine Folie, insbesondere eine Folienbahn, aus welcher der betroffene Folienkörper 21.1, 21.2, vorzugsweise durch Ausschneiden oder Ausstanzen, hergestellt wird bzw. ist, einseitig mit der Dekoration bzw. mit mehreren solchen Dekorationen versehen. Die aus den Folienkörpern 21.1, 21.2 gebildeten Einlegerteile 27.1.1, 27.1.2; 27.2.1, 27.2.2 werden derart in das offene Spritzgießwerkzeug 31 eingelegt, dass sich die Dekoration bzw. die jeweilige Dekoration auf der jeweiligen Außenseite befindet.

Der einteilige, doppelwandigen Einleger, kann in eine einzige Werkzeugform der Werkzeugformen, vorzugsweise in einen Werkzeugform-Hohlraum einer ersten Werkzeugform/Matrize eines Spritzgießwerkzeugs eingelegt werden.

Ein großer Vorteil des erfindungsgemäßen Verfahrens ist es, dass schon während des Wieder-Öffnens des Spritzgießwerkzeugs 31 oder unmittelbar nach dem Wieder-Öffnen des Spritzgießwerkzeugs 31 ein oder mehrere weitere Einleger, vorzugsweise wiederum ein gleich gestalteter, einteiliger, doppelwandiger, erster Einleger 25.1, 25.2, auf der Entnahmeseite 52, also in den Werkzeugform-Hohlraum 36 der Matrize 33, eingelegt werden kann, während gleichzeitig auf der gegenüberliegenden Werkzeugseite, also auf der Entformungsseite 51 und mithin auf der Seite der Patrize 34, der fertige Verbundkörper 25.1. 25.2 des vorangegangenen sogenannten Schusses entnommen werden kann. Dadurch kann bereits unmittelbar anschließend das Spritzgießwerkzeug 31 wieder für den nächsten Schuss geschlossen werden. Dadurch lässt sich gegenüber dem Stand der Technik eine deutliche Verkürzung der Zykluszeit erreichen.

In einer Kurzfassung kann das erfindungsgemäße Verfahren auch wie folgt beschrieben werden: Der einteilige, doppelwandige Einleger 25.1, 25.2, insbesondere eine Folie, wird auf einer einzigen Werkzeugseite bzw. in eine einzige Werkzeugform 33 des Spritzgießwerkzeugs 31 eingelegt. Dieses kann auf der Entformungsseite 51, optimalerweise aber auf der gegenüberliegenden Seite, also auf der Entnahmeseite 52 erfolgen. Nach dem Schließen der Spritzgießform 31 drückt die durch das Loch 24 der Folie einfließende Schmelze 63 denjenigen Einleger-Wandteil 27.1.1, 27.2.1 des einteiligen, doppelwandigen Einlegers 25.1, 25.2, der dem Einleger-Wandteil 27.1.2, 27.2.2 mit Loch 24 gegenüber liegt, nach oben bzw. in Richtung von dem Einleger-Wandteil 27.1.2, 27.2.2 mit Loch 24 weg und spreizt die aufeinander liegenden Einlegerteile/Folienseiten 27.1.1, 27.1.2; 27.2.1, 27.2.2 (z.B. IML-Folie/n) auseinander. Die Schmelze 63 wird über die linsenförmige, konkave Gestaltung der in Aufspritzrichtung der Schmelze 63 betrachtet, hinter dem Einlegerteil 27.1.1, 27.2.1 angeordneten Vertiefung 40 der zugehörigen Werkzeugform 33 pilzförmig umgelenkt und radial nach außen abgeleitet. Beide Einlegerteile 27.1.1, 27.2.1; 27.2.1, 27.2.2. werden durch die Schmelze 63 nach außen an die zugeordnete Werkzeugform 33, 34 gepresst. Durch diese Umlenkung der Schmelze 63 kann es nicht zu Hinterspritzungen des Einlegerteils 27.1.2, 27.2.2 mit Loch 24 kommen. Vorzugsweise drückt die konvexe Form der Anspritz-Geometrie bzw. der Werkzeug-Düse 42 die Einlegerteile 27.1.1, 27.1.2; 27.2.1, 27.2.2 bei geschlossenen Spritzgießwerkzeug 31 auseinander, bevor die Schmelze 63 eintritt bzw. eingespritzt wird. Dies ist aber nicht zwingend. Der einteilige, doppelwandige Einleger 25.1, 25.2, vorzugsweise in Form einer, insbesondere gefalteten, IML-Folie, ist mit seinem Einlegerteil-Träger 67.1, 67.2 in einem einstufigen Arbeitsprozess hergestellt. Diesen bezeichnet man auch als In-Mold-Labeling (IML) bzw. als IML-Verfahren.

### Bezugszeichenliste

- 20.1: erster Verbundkörper/Deckel
- 20.2: zweiter Verbundkörper/Deckel
- 21.1: erster Folienkörper
- 21.2: zweiter Folienkörper
- 22.1.1: erster Folienkörperteil von 21.1
- 22.1.2: zweiter Folienkörperteil von 21.1 (mit Loch)
- 22.2.1: erster Folienkörperteil von 21.2
- 22.2.2: zweiter Folienkörperteil von 21.2 (mit Loch)
- 23.1: erster Folien-Verbindungskörperteil
- 23.2: zweiter Folien-Verbindungskörperteil
- 24: Loch
- 25.1: einteiliger (doppelwandiger) erster Einleger
- 25.2: einteiliger (doppelwandiger) zweiter Einleger
- 26: Schwenkachse
- 27.1.1: erster Einlegerteil/Einleger-Wandteil von 25.1
- 27.1.2: zweiter Einlegerteil/Einleger-Wandteil (mit Loch) von 25.1
- 27.2.1: erster Einlegerteil/Einleger-Wandteil von 25.2
- 27.2.2: zweiter Einlegerteil/Einleger-Wandteil (mit Loch) von 25.2
- 28: Einleger-Verbindungsteil
- 29: Lochrand von 24
- 30: Loch-Innendurchmesser
- 31: Spritzgießwerkzeug/Spritzgießform
- 32: Werkzeug-Öffnungsstellung
- 33: erste Werkzeugform/Matrize
- 34: zweite Werkzeugform/Patrize
- 35: Kern von 34
- 36: Werkzeugform-Hohlraum
- 37: Werkzeugform-Rand
- 38: Werkzeugform-Boden
- 39: erste Anlagefläche
- 40: Vertiefung
- 41: Werkzeugform-Bereich
- 42: Werkzeug-Düse
- 43: Masse-Austrittsöffnung/Schmelze-Austrittsöffnung
- 44: Massekanal/Schmelzekanal
- 44.1: Schmelzekanal
- 44.2: Schmelzekanal
- 45: Schmelzeführungsdüse
- 46: Austritts-Innendurchmesser
- 47: Außenkontur von 42
- 48: zweite Anlagefläche
- 49: Basis von 42
- 50: Außendurchmesser von 49
- 51: Entformungsseite
- 52: Entnahmeseite
- 53: Werkzeug-Bewegungsrichtung/lineare Bewegung (Doppelpfeil)
- 54: Werkzeug-Trennebene
- 55: Zentrum (des Loches)
- 56: Längsachse von 42
- 61: Werkzeug-Schließstellung
- 62: Spalt (vor dem Einspritzen)
- 63: fließfähige, verfestigbare Masse/Schmelze
- 64: Hohlraum
- 66: Schmelze-Kern
- 67.1: (Verbundkörper-)Kern/Einlegerteil-Träger
- 67.2: (Verbundkörper-)Kern/Einlegerteil-Träger
- 68: Werkzeug-Hohlraum
- 69: verfestigte Masse

## Patentansprüche

1. Verfahren zur Herstellung eines Verbundkörpers (20.1, 20.2) durch Spritzgießen unter Verwendung eines aus wenigstens zwei Werkzeugformen (33, 34) gebildeten Spritzgießwerkzeugs (31), das eine erste Werkzeugform (33) der Werkzeugformen (33, 34) und eine zweite Werkzeugform (34) der Werkzeugformen (33, 34) enthält,
wobei die erste Werkzeugform (33) einen Werkzeugform-Hohlraum (36) aufweist, der in Richtung der zweiten Werkzeugform (34) offen ist,
und wobei das Spritzgießwerkzeug (31) von einer Werkzeug-Öffnungsstellung (32), in der die erste Werkzeugform (33) und die zweite Werkzeugform (34) voneinander abgehoben sind, in einer Werkzeug-Bewegungsrichtung (53) in eine Werkzeug-Schließstellung (61) überführbar ist, und umgekehrt, in der die erste Werkzeugform (33) und die zweite Werkzeugform (34) unter Einschließen eines den Werkzeugform-Hohlraum (36) enthaltenden Werkzeug-Hohlraums (68) zur Aufnahme der Einlegerteile (27.1.1, 27.1.2; 27.2.1, 27.2.2) und der fließfähigen, verfestigbaren Masse (63) über eine Werkzeug-Trennebene (54) getrennt aneinander anliegen,
wobei in einem ersten Verfahrensschritt die Einlegerteile (27.1.1, 27.1.2; 27.2.1, 27.2.2) in das sich in seiner Werkzeug-Öffnungsstellung (32) befindliche Spritzgießwerkzeug (31) eingelegt werden,
von denen der zweite Einlegerteil (27.1.2; 27.2.2) ein mit einem umlaufenden Lochrand (29) begrenztes Loch (24) mit einem Loch-Innendurchmesser (30) aufweist, der größer ist als der Austritts-Innendurchmesser (46) der Masse-Austrittsöffnung (43) der Werkzeug-Düse (42), wobei der zweite Einlegerteil (27.1.2; 27.2.2) derart in die erste Werkzeugform (33) des sich in seiner Werkzeug-Öffnungsstellung (32) befindlichen Spritzgießwerkzeugs (31) eingelegt wird, dass das Loch (24) der Masse-Austrittsöffnung (43) der Werkzeug-Düse (42) gegenüberliegt, und wobei der zweite Einlegerteil (27.1.2; 27.2.2) derart relativ zu der Masse-Austrittsöffnung (43) der Werkzeug-Düse (42) positioniert wird, dass bei einer Projektion des Loches (24) und der Masse-Austrittsöffnung (43) in eine gemeinsame Projektionsebene, die senkrecht zu der Werkzeug-Bewegungsrichtung (53) und/oder parallel zu der Werkzeug-Trennebene (54) ausgebildet ist, der Lochrand (29) des Loches (24) die Masse-Austrittsöffnung (43) der Werkzeug-Düse (42) in einem radialen Abstand vollumfänglich umgreift,
und von denen der erste Einlegerteil (27.1.1; 27.2.1) den zweiten Einlegerteil (27.1.2, 27.2.2) auf dessen der ersten Anlagefläche (39) der ersten Werkzeugform (33) gegenüberliegenden Seite unter vollständiger Überdeckung des Loches (24) des zweiten Einlegerteils (27.1.2; 27.2.2) übergreift,
und wobei der erste Einlegerteil (27.1.1; 27.2.1) und der zweite Einlegerteil (27.1.2; 27.2.2) Bestandteile eines einteiligen, doppelwandigen Einlegers (25.1, 25.2) sind, der im Zuge des ersten Verfahrensschritts entweder in die erste Werkzeugform (33) oder in die zweite Werkzeugform eingelegt wird,
wonach in einem zweiten Verfahrensschritt das Spritzgießwerkzeug (31) in seine Werkzeug-Schließstellung (61) überführt wird,
wonach in einem dritten Verfahrensschritt die fließfähige, verfestigbare Masse (63) durch den Massekanal (44) hindurch und aus der Masse-Austrittsöffnung (43) der Werkzeug-Düse (42) in Richtung der ersten Werkzeugform (33) unmittelbar auf den ersten Einlegerteil (27.1.1; 27.2.1) aufgespritzt wird, sodass dadurch der erste Einlegerteil (27.1.1; 27.2.1) und der zweite Einlegerteil (27.1.2; 27.2.2) unter Ausbildung eines zu der Masse-Austrittsöffnung (43) der Werkzeug-Düse (42) und/oder zu einem Zentrum (55) des Loches (24) offenen, ringförmigen Hohlraums (64) auseinandergespreizt werden,
wobei die fließfähige, verfestigbare Masse (63) einen ersten Teilbereich des ersten Einlegerteils (27.1.1; 27.2.1) an die Vertiefung (40) der ersten Werkzeugform (33) andrückt und einen zweiten Teilbereich des zweiten Einlegerteils (27.1.2, 27.2.2) an die zweite Anlagefläche (48) der zweiten Werkzeugform (34) andrückt,
wobei nach einem Verfestigen der fließfähigen, verfestigbaren Masse (63) der Verbundkörper (25.1, 25.2) erhalten wird, bei dem ein aus der verfestigten Masse (69) gebildeter Verbundkörper-Kern (67.1, 67.2) von dem ersten Einlegerteil (27.1.1; 27.2.1) und dem zweiten Einlegerteil (27.1.2; 27.2.2) teilweise oder vollständig umschlossen ist,
wonach in einem vierten Verfahrensschritt das Spritzgießwerkzeug (31) von seiner Werkzeug-Schließstellung (61) in seine Werkzeug-Öffnungsstellung (32) überführt wird, wobei oder wonach der fertige Verbundkörper (20.1, 20.2) entweder aus dem Spritzgießwerkzeug (31) entnommen wird oder schwerkraftbedingt aus dem Spritzgießwerkzeug (31) fällt,
**dadurch gekennzeichnet,**
**dass** der Werkzeugform-Hohlraum (36) der ersten Werkzeugform (33) eine Vertiefung (40) aufweist, die sich ausgehend von einer den Werkzeugform-Hohlraum (36) begrenzenden und zur Anlage eines ersten Einlegerteils (27.1.1; 27.2.1) von Einlegerteilen (27.1.1, 27.1.2; 27.2.1, 27.2.2) bestimmten ersten Anlagefläche (39) nach innen bzw. von der zweiten Werkzeugform (34) weg erstreckt,
und **dass** die zweite Werkzeugform (34) in einem der Vertiefung (40) der ersten Werkzeugform (33) gegenüberliegenden Werkzeugform-Bereich (41) eine Werkzeug-Düse (42) aufweist, die einen Massekanal (44) zum Zuführen einer fließfähigen, verfestigbaren Masse (63) umfasst, der in eine Masse-Austrittsöffnung (43) der Werkzeug-Düse (42) mündet, die einen Austritts-Innendurchmesser (46) aufweist,
und **dass** der im Zuge des ersten Verfahrensschritts entweder in die erste Werkzeugform (33) oder in die zweite Werkzeugform eingelegte einteilige, doppelwandige Einleger (25.1, 25.2) derart ausgebildet ist, dass sein erster Einlegerteil (27.1.1; 27.2.1) und sein zweiter Einlegerteil (27.1.2; 27.2.2) über einen Einleger-Verbindungsteil (28) einteilig und materialgleich miteinander verbunden sind,
wobei der Einleger-Verbindungsteil (28) im Zuge des Einspritzens der fließfähigen, verfestigbaren Masse (63) von dieser umspritzt wird, so dass in dem fertigen Verbundkörper (20.1, 20.2) der mit dem ersten Einlegerteil (27.1.1; 27.2.1) und mit dem zweiten Einlegerteil (27.1.2; 27.2.2) einteilig und materialgleich verbundene Einleger-Verbindungsteil (28) kraftschlüssig oder formschlüssig oder stoffschlüssig eingebunden ist.

2. Verfahren nach Anspruch 1, **dadurch gekennzeichnet, dass** im Zuge des ersten Verfahrensschrittes der einteilige, doppelwandige Einleger (25.1, 25.2) mit seinen unmittelbar aneinander liegenden Einlegerteilen (27.1.1, 27.1.2; 27.2.1, 27.2.2) in die erste Werkzeugform (33) oder in die zweite Werkzeugform eingelegt wird und/oder derart in die erste Werkzeugform (33) oder in die zweite Werkzeugform eingelegt wird, dass seine Einlegerteile (27.1.1, 27.1.2; 27.2.1, 27.2.2) vor dem Aufspritzen der fließfähigen, verfestigbaren Masse (63) unmittelbar aneinander liegen.

3. Verfahren nach Anspruch 1 oder 2, **dadurch gekennzeichnet, dass** während des Überführens des Spritzgießwerkzeugs (31) in seine Werkzeug-Schließstellung (6)1 oder nach dem Überführen des Spritzgießwerkzeugs (31) in seine Werkzeug-Schließstellung (61), und vor dem Aufspritzen der fließfähigen, verfestigbaren Masse (63) unmittelbar auf den ersten Einlegerteil (27.1.1; 27.2.1), die Werkzeug-Düse (42) und der erste Einlegerteil (27.1.1; 27.2.1) relativ zueinander aufeinander zu bewegt werden, so dass der erste Einlegerteil (27.1.1; 27.2.1) mittels der Werkzeug-Düse (42) zumindest teilweise von dem zweiten Einlegerteil (27.1.2; 27.2.2) abgehoben wird, wodurch ein zu der Masse-Austrittsöffnung (43) der Werkzeug-Düse (42) hin offener, ringförmiger Spalt (62) zwischen dem ersten Einlegerteil (27.1.1; 27.2.1) und dem zweiten Einlegerteil (27.1.2; 27.2.2) ausgebildet wird.

4. Verfahren nach einem der vorstehenden Ansprüche, **dadurch gekennzeichnet, dass** im Zuge des ersten Verfahrensschrittes der einteilige, doppelwandige Einleger (25.1, 25.2) in den Werkzeugform-Hohlraum (36) der ersten Werkzeugform (33) eingelegt wird.

5. Verfahren nach einem der vorstehenden Ansprüche, **dadurch gekennzeichnet, dass** der einteilige, doppelwandige Einleger (25.1, 25.2), aus einem flächigen Körper oder aus einem Flachmaterial oder aus einem Folienkörper (21.1, 21.2), durch Falten oder Biegen hergestellt ist oder wird, bevor er im Zuge des ersten Verfahrensschrittes in das sich in seiner Werkzeug-Öffnungsstellung (32) befindliche Spritzgießwerkzeug (31) eingelegt wird.

6. Verfahren nach einem der vorstehenden Ansprüche, **dadurch gekennzeichnet, dass** der erste Einlegerteil (27.1.1; 27.2.1) und/oder der zweite Einlegerteil (27.1.2; 27.2.2) sowie die fließfähige, verfestigbare Masse (63) hinsichtlich ihrer physikalischen und/oder chemischen Eigenschaften derart ausgewählt werden, dass der erste Einlegerteil (27.1.1; 27.2.1) und/oder der zweite Einlegerteil (27.1.2; 27.2.2) in dem fertigen Verbundkörper (20.1, 20.2) mit dem aus der verfestigten Masse (69) gebildeten Verbundkörper-Kern (67.1, 67.2) entweder dauerhaft oder lösbar verbunden ist oder sind.

7. Verfahren nach einem der vorstehenden Ansprüche, **dadurch gekennzeichnet, dass**
entweder
der auf einer ersten Seite seiner voneinander weg weisenden Seiten mit einer ersten Dekoration versehene, separate, erste Einleger und der auf einer zweiten Seite seiner voneinander weg weisenden Seiten mit einer zweiten Dekoration versehene, separate, zweite Einleger im Zuge des ersten Verfahrensschrittes derart in das sich in seiner Öffnungsstellung befindliche Spritzgießwerkzeug eingelegt werden, dass die mit der ersten Dekoration versehene erste Seite und die mit der zweiten Dekoration versehenen zweite Seite voneinander weg weisende Außenseiten ausbilden
oder
dass der auf einer ersten Seite seines ersten Einlegerteils (27.1.1; 27.2.1) mit einer ersten Dekoration versehene und auf seiner davon weg weisenden zweiten Seite seines zweiten Einlegerteils (27.1.2; 27.2.2) mit einer zweiten Dekoration versehene, einteilige, doppelwandige Einleger (25.1, 25.2) im Zuge des ersten Verfahrensschrittes derart in das sich in seiner Werkzeug-Öffnungsstellung (32) befindliche Spritzgießwerkzeug (31) eingelegt wird, dass die mit der ersten Dekoration versehene erste Seite und die mit der zweiten Dekoration versehene zweite Seite voneinander weg weisende Außenseiten ausbilden.

## Claims

1. Method for producing a composite body (20.1, 20.2) by injection moulding using an injection tool (31) consisting of at least two moulds (33, 34), which contains a first mould (33) of the moulds (33, 34) and a second mould (34) of the moulds (33, 34),
wherein the first mould (33) has a mould cavity (36) that is open in the direction of the second mould (34), and wherein the injection tool (31) can be switched in a tool movement direction (53) and in the opposite direction, from a tool open position (32), in which the first mould (33) and the second mould (34) are lifted apart, into a tool closed position (61), in which the first mould (33) and the second mould (34), lie against each other, separated by a tool parting plane (54), enclosing a tool cavity (68) which contains the mould cavity (36) for receiving the insert parts (27.1.1, 27.1.2; 27.2.1, 27.2.2) and the flowable, hardenable mass (63),
wherein in a first method step the insert parts (27.1.1, 27.1.2; 27.2.1, 27.2.2) are placed in the injection tool (31), which it in its tool open position (32), of which the second insert part (27.12; 27.2.2) has a hole (24) delimited by a circumferential hole border (29) and having a hole internal diameter (30) which is larger than the discharge internal diameter (46) of the mass discharge opening (43) in the tool nozzle (42), wherein the second insert part (27.12; 27.2.2) is inserted in the first mould (33) of the injection tool (31) in the tool open position (32) thereof in such manner that the hole (24) of the mass discharge opening (43) is located opposite the tool nozzle (42), and wherein the second insert part (27.1.2; 272.2) is positioned relative to the mass discharge opening (43) of the tool nozzle (42) in such manner that in a projection of the hole (24) and the mass discharge opening (43) in a common projection plane aligned perpendicularly to the tool's direction of movement (53) and/or parallel to the tool parting plane (54), the hole border (29) of the hole (24) encircles the entire circumference of the mass discharge opening (43) of the tool nozzle (42) with a radial separation,
and of which the first insert part (27.1.1; 27.21) overlaps the second insert part (27.12, 27.22) on the side thereof opposite the first contact surface (39) of the first mould (33), completely covering the hole (24) of the second insert part (27.12; 27.22),
and wherein the first insert part (27.1.1; 27.21) and the second insert part (27.12; 27.22) are components of a single-part, double-walled insert (25.1, 25.2) which is placed either in the first mould (33) or in the second mould in the course of the first method step, after which in a second method step the injection tool (31) is switched to its tool closed position (61), after which in a third method step the flowable, hardenable mass (63) is injected through the sprue (44) an out of the mass discharge opening (43) of the tool nozzle (42) in the direction of the first mould (33), directly onto the first insert part (27.1.1; 27.2.1), with the effect that thereby the first insert part (27.1.1; 27.2.1) and the second insert part (27.1.2; 27.2.2) are spread apart, forming an annular cavity (64) which is open towards the mass discharge opening (43) of the tool nozzle (42) and/or towards a centre (55) of the hole (24),
wherein the flowable, hardenable mass (63) presses a first partial region of the first insert part (27.1.1; 27.2.1) against the recess (40) of the first mould (33) and presses a second partial region of the second insert part (27.1.2, 27.2.2) against the second contact surface contact surface (48) of the second mould (34), wherein after hardening of the flowable, hardenable mass (63) the composite body (25.1, 25.2) is obtained, in which a composite body core (67.1, 67.2) formed from the hardened mass (69) is partly or completely surrounded by the first insert part (27.1.1; 27.2.1) and the second insert part (27.1.2; 27.2.2),
after which, in a fourth method step the injection tool (31) is switched from its tool closed position (61) to its tool open position (32), wherein or after which the finished composite body (20.1, 20.2) is either removed from the injection tool (31) or falls out of the injection tool (31) due to the force of gravity,
**characterized in that**
the mould cavity (36) of the first mould (33) has a recess (40) which extends inwardly and away from the second mould (34) starting from a first contact surface (39) that delimits the mould cavity (36) and is designed for placement of a first insert part (27.1.1; 27.2.1) of insert parts (27.1.1, 27.1.2; 27.2.1, 27.2.2),
and that the second mould (34) has a tool nozzle (42) in a mould region (41) opposite the recess (40) of the first mould (33), which nozzle comprises a sprue (44) for introducing a flowable, hardenable mass (63), which opens into a mass discharge opening (43) of the tool nozzle (42), which has a discharge inner diameter (46), and that the single-part, double-walled insert (25.1, 25.2) that is inserted either in the first mould (33) or in the second mould in the course of the first method step is constructed in such manner that the first insert part (27.1.1; 27.2.1) and the second insert part (27.12; 27.2.2) thereof are connected to each other integrally and with the same material via an insert connecting part (28),
wherein the insert connecting part (28) is overmoulded by the flowable, hardenable mass (63) when said mass is injected, such that the insert connecting part (28) which is connected to the first insert part (27.1.1; 27.2.1) and to the second insert part (27.12; 27.2.2) integrally and with the same material is incorporated in the finished composite body (20.1, 20.2) in force-locking or form-locking or bonded manner.

2. Method according to Claim 1, **characterized in that** in the course of the first method step the single-part, double-walled insert (25.1, 25.2) with its immediately adjacently positioned insert parts (27.1.1, 27.1.2; 27.2.1, 27.2.2) is placed in the first mould (33) or in the second mould and/or placed in the first mould (33) or in the second mould in such manner that its insert parts (27.1.1, 27.1.2; 27.2.1, 27.2.2) are positioned directly beside each other before the injection of the flowable, hardenable mass (63).

3. Method according to Claim 1 or 2, **characterized in that** while the injection tool (31) is switched to its tool closed position (61) or after the injection tool (31) has been switched to its tool closed position (61), and before the injection of the flowable, hardenable mass (63) directly onto the first insert part (27.1.1; 27.21), the tool nozzle (42) and the first insert part (27.1.1; 27.2.1) are moved towards each other relative to one another, so that the first insert part (27.1.1; 27.2.1) is at least partly lifted away from the second insert part (27.12; 27.22) by means of the tool nozzle (42), with the effect that an annular gap (62) which is open towards the mass discharge opening (43) of the tool nozzle (42) is formed between the first insert part (27.1.1; 27.21) and the second insert part (27.12; 27.22.

4. Method according to any one of the preceding claims, **characterized in that** during the first method step the single-part, double-walled insert (25.1, 25.2) is placed in the mould cavity (36) of the first mould (33) .

5. Method according to any one of the preceding claims, **characterized in that** the single-part, double-walled insert (25.1, 25.2) has been or is produced from a two-dimensional body or from a flat material or from a foil body (21.1, 21.2) by folding or bending, before it is placed in the injection tool (31) in the tool open position (32) thereof in the course of the first method step.

6. Method according to any one of the preceding claims, **characterized in that** the first insert part (27.1.1; 27.2.1) and/or the second insert part (27.12; 27.2.2) as well as the flowable, hardenable mass (63) are selected in terms of their physical and/or chemical properties such that in the finished composite body (20.1, 20.2) the first insert part (27.1.1; 27.2.1) and/or the second insert part (27.1.2; 27.2.2) is or are connected either permanently or separably to the composite body core (67.1, 67.2) formed from the hardened mass (69).

7. Method according to any one of the preceding claims, **characterized in that** either the separate, first insert furnished with a first decoration on a first side of the sides thereof facing away from each other, and the separate, second insert furnished with a second decoration on a second side of the sides thereof facing away from each other are placed in the injection tool in its open position in the course of the first method step in such a way that the first side furnished with the first decoration and the second side furnished with the second decoration form outer sides facing away from each other, or
that the single-part, double-walled insert (25.1, 25.2) furnished with a first decoration on a first side of its first insert part (27.1.1; 27.2.1) and furnished with a second decoration on its second side of its second insert part (27.1.2, 27.2.2) facing away therefrom is placed in the injection tool (31) in its open position (32) in the course of the first method step in such a way that the first side furnished with the first decoration and the second side furnished with the second decoration form outer sides facing away from each other.

## Revendications

1. Procédé de fabrication d'un corps composite (20.1, 20.2) par moulage par injection en utilisant un outil de moulage par injection (31) constitué d'au moins deux moules (33,34), qui contient un premier moule (33) des moules (33,34) et un second moule (34) des moules (33,34),
le premier moule (33) présentant une cavité de moule (36) qui est ouverte en direction du second moule (34), et l'outil de moulage par injection (31) pouvant être passé d'une position d'ouverture d'outil (32), dans laquelle le premier moule (33) et le second moule (34) sont soulevés l'un de l'autre, dans un sens de mouvement d'outil (53), dans une position de fermeture d'outil (61) et inversement, dans laquelle le premier moule (33) et le second moule (34) sont en contact mutuel en étant séparés l'un de l'autre par un plan de séparation d'outil (54) en circonscrivant une cavité d'outil (68) contenant la cavité de moule (36) pour recevoir les pièces insérées (27.1.1, 27.1.2 ; 27.2.1, 27.2.2) et la masse fluide solidifiable (63),
les pièces insérées (27.1.1, 27.1.2 ; 27.2.1, 27.2.2) étant insérés dans l'outil de moulage par injection (31) se trouvant dans sa position d'ouverture d'outil (32) dans une première étape opératoire,
parmi lesquelles pièces la seconde pièce insérée (27.1.2 ; 27.2.2) présentant un trou (24) limité par un bord de trou périphérique (29) ayant un diamètre intérieur de trou (30) qui est supérieur au diamètre intérieur de sortie (46) de l'orifice de sortie de masse (43) de la buse d'outil (42), la seconde pièce insérée (27.1.2 ; 27.2.2) étant insérée dans le premier moule (33) de l'outil de moulage par injection (31) se trouvant dans sa position d'ouverture d'outil (32) de manière à ce que le trou (24) de l'orifice de sortie de masse (43) se trouve à l'opposé de la buse d'outil (42), et que la seconde pièce insérée (27.1.2 ; 27.2.2) soit positionnée par rapport à l'orifice de sortie de masse (43) de la buse d'outil (42) de manière à ce que, lors d'une projection du trou (24) et de l'orifice de sortie de masse (43) dans un plan de projection commun qui est formé perpendiculairement au sens de mouvement de l'outil (53) et/ou parallèlement au plan de séparation d'outil (54), le bord de trou (29) du trou (24) entoure sur toute sa circonférence l'orifice de sortie de masse (43) de la buse d'outil (42) à distance radiale,
et parmi lesquelles pièces la première pièce insérée (27.1.1, 27.2.1) chevauche la seconde pièce insérée (27.1.2 ; 27.2.2) sur sa face opposée à la première surface de contact (39) du premier moule (33) en recouvrant complètement le trou (24) de la seconde pièce insérée (27.1.2 ; 27.2.2),
et la première pièce insérée (27.1.1, 27.2.1) et la seconde pièce insérée (27.1.2 ; 27.2.2) faisant partie intégrante d'un insert monobloc à double paroi (25.1, 25.2) qui est inséré au cours de la première étape opératoire soit dans le premier moule (33), soit dans le second moule,
après quoi, dans une deuxième étape opératoire, l'outil de moulage par injection (31) est passé dans sa position de fermeture d'outil (61),
après quoi, dans une troisième étape opératoire, la masse fluide solidifiable (63) est injectée par le canal de masse (44) et depuis l'orifice de sortie de masse (43) de la buse d'outil (42) en direction du premier moule (33) directement sur la première pièce insérée (27.1.1, 27.2.1), de sorte que la première pièce insérée (27.1.1, 27.2.1) et la seconde pièce insérée (27.1.2 ; 27.2.2) sont ainsi écartées l'une de l'autre en formant une cavité de forme annulaire (64) ouverte vers l'orifice de sortie de base (43) de la buse d'outil (42) et/ou vers un centre (55) du trou (24),
la masse fluide solidifiable (63) comprimant une première zone partielle de la première pièce insérée (27.1.1, 27.2.1) sur le creux (40) du premier moule (33) et une seconde zone partielle de la seconde pièce insérée (27.1.2 ; 27.2.2) sur la seconde surface de contact (48) du second moule (34),
étant obtenu, après solidification de la masse fluide solidifiable (63), le corps composite (25.1, 25.2) dans lequel un noyau de corps composite (67.1, 67.2) composé de la masse solidifiée (69) est partiellement ou totalement entouré par la première pièce insérée (27.1.1, 27.2.1) et la seconde pièce insérée (27.1.2 ; 27.2.2),
après quoi, dans une quatrième étape opératoire, l'outil de moulage par injection (31) est passé de sa position de fermeture d'outil (61) dans sa position d'ouverture d'outil (32), sachant que ou après quoi le corps composite fini (20.1, 20.2) est soit sorti de l'outil de moulage par injection (31), soit tombe de l'outil de moulage par injection (31) sous l'effet de la gravité,
**caractérisé en ce que**
la cavité de moule (36) du premier moule (33) présente un creux (40) qui s'étend, en partant d'une première surface de contact (39) limitant la cavité d'outil (36) et destinée à venir en contact avec une première pièce insérée (27.1.1, 27.2.1) des pièces insérées (27.1.1, 27.1.2 ; 27.2.1, 27.2.2), vers l'intérieur ou depuis le second moule (34),
et que le second moule (34) présente, dans une zone de moule (41) opposée au creux (40) du premier moule (33), une buse d'outil (42) qui comprend un canal de masse (44) pour acheminer une masse fluide solidifiable (63), lequel canal débouche dans un orifice de sortie de masse (43) de la buse d'outil (42) qui présente un diamètre intérieur de sortie (46),
et que, au cours de la première étape opératoire, les inserts monoblocs à double paroi (25.1, 25.2) 34 soit dans le premier moule (33), soit dans le second moule sont réalisés de manière à ce que sa première pièce insérée (27.1.1, 27.2.1) et sa seconde pièce insérée (27.1.2 ; 27.2.2) soient connectées entre elles en une pièce et par le même matériau par une pièce de connexion d'insert (28),
la pièce de connexion d'insert (28) étant, au cours de l'injection de la masse fluide solidifiable (63), entourée par cette injection, de sorte que, dans le corps composite fini (20.1, 20.2), la pièce de connexion d'insert (28) connectée en une pièce et par le même matériau à la première pièce insérée (27.1.1, 27.2.1) et à la seconde pièce insérée (27.1.2 ; 27.2.2) est intégrée par correspondance mécanique ou correspondance géométrique.

2. Procédé selon la revendication 1, **caractérisé en ce que**, au cours de la première étape opératoire, l'insert monobloc à double paroi (25.1, 25.2) est inséré avec ses pièces d'insertion (27.1.1, 27.1.2 ; 27.2.1, 27.2.2) immédiatement superposées dans le premier moule (33) ou dans le second moule et/ou est inséré dans le premier moule (33) ou dans le second moule de manière à ce que ses pièces d'insertion (27.1.1, 27.1.2 ; 27.2.1, 27.2.2) soient immédiatement superposées avant l'injection de la masse fluide solidifiable (63).

3. Procédé selon la revendication 1 ou 2, **caractérisé en ce que**, pendant le passage de l'outil de moulage par injection (31) dans sa position de fermeture d'outil (61) ou après le passage de l'outil de moulage par injection (31) dans sa position de fermeture d'outil (61), et avant l'injection de la masse fluide solidifiable (63) directement sur la première pièce insérée (27.1.1, 27.2.1), la buse d'outil (42) et la première pièce insérée (27.1.1, 27.2.1) sont déplacées mutuellement l'une vers l'autre, de sorte que la première pièce insérée (27.1.1, 27.2.1) est soulevée au moyen de la buse d'outil (42) du moins partiellement de la seconde pièce insérée (27.1.2 ; 27.2.2), ce qui a pour effet qu'une fente de forme annulaire (62) ouverte sur l'orifice de sortie de masse (43) de la buse d'outil (42) est constituée entre la première pièce insérée (27.1.1, 27.2.1) et la seconde pièce insérée (27.1.2 ; 27.2.2)

4. Procédé selon une des revendications précédentes, **caractérisé en ce que**, au cours de la première étape opératoire, l'insert monobloc à double paroi (25.1, 25.2) est inséré dans la cavité de moule (36) du premier moule (33).

5. Procédé selon une des revendications précédentes, **caractérisé en ce que** l'insert monobloc à double paroi (25.1, 25.2) est fabriqué à partir d'un corps de surface ou d'un matériau plat ou d'un corps en film (21.1, 21.2) par pliage ou cintrage, avant d'être, au cours de la première étape opératoire, inséré dans l'outil de moulage par injection (31) se trouvant dans sa position d'ouverture d'outil (32).

6. Procédé selon une des revendications précédentes, **caractérisé en ce que** la première pièce insérée (27.1.1, 27.2.1) et/ou la seconde pièce insérée (27.1.2 ; 27.2.2), de même que la masse fluide solidifiable (63), sont sélectionnées au niveau de leurs propriétés physiques et/ou chimiques de manière à ce que la première pièce insérée (27.1.1, 27.2.1) et/ou la seconde pièce insérée (27.1.2 ; 27.2.2) soi(en)t connectée(s) , dans le corps composite fini (20.1, 20.2) au noyau de corps composite (67.1, 67.2) composé de la masse solidifiée (69) soit de manière permanente, soit de manière dissociable.

7. Procédé selon une des revendications précédentes,
**caractérisé en ce que**
soit le premier insert séparé pourvu, sur une première face de ses faces détournées l'une de l'autre, d'une première décoration et, sur une seconde face de ses faces détournées l'une de l'autre, d'une seconde décoration, est inséré, au cours de la première étape opératoire, dans l'outil de moulage par injection se trouvant dans sa position d'ouverture de manière à ce que la première face pourvue de la première décoration et la seconde face pourvue de la seconde décoration constituent des faces extérieures détournées l'une de l'autre,
soit le premier insert séparé à double paroi (25.1, 25.2) pourvu, sur une première face de sa première pièce d'insert (27.1.1 ; 27.2.1), d'une première décoration et, sur une seconde face de sa seconde pièce d'insert (27.1.2 ; 27.2.2) détournée de celle-ci, d'une seconde décoration, est inséré, au cours de la première étape opératoire, dans l'outil de moulage par injection (31) se trouvant dans sa position d'ouverture d'outil (32) de manière à ce que la première face pourvue de la première décoration et la seconde face pourvue de la seconde décoration constituent des faces extérieures détournées l'une de l'autre.
